# EUROPÄISCHE PATENTSCHRIFT

(11) **EP 4 533 610 B1**
(45) Veröffentlichungstag und Bekanntmachung des Hinweises auf die Patenterteilung: **08.04.2026**
(21) Anmeldenummer: 23727916.1
(22) Anmeldetag: 25.05.2023
(51) Int. Cl.: H01T 21/02, H01T 13/20, H01T 13/39

(54) **VERFAHREN ZUR HERSTELLUNG EINER ELEKTRODE FÜR EINE ZÜNDVORRICHTUNG**
METHOD FOR PRODUCING AN ELECTRODE FOR AN IGNITION DEVICE
PROCÉDÉ DE FABRICATION D'UNE ÉLECTRODE POUR UN DISPOSITIF D'ALLUMAGE

(30) Priorität: 25.05.2022 AT 503762022
(43) Veröffentlichungstag der Anmeldung: 09.04.2025
(73) Patentinhaber: Swacrit Systems GmbH, 6060 Hall in Tirol (AT)
(72) Erfinder: RAUCH, Josef, 6020 Innsbruch (AT)
(74) Vertreter: Wildhack & Jellinek Patentanwälte GmbH
(86) Internationale Anmeldenummer: PCT/AT2023/060169
(87) Internationale Veröffentlichungsnummer: WO 2023/225699

(56) Entgegenhaltungen:
- EP-A1- 2 738 890
- EP-A1- 3 139 457
- EP-A1- 3 196 995
- DE-T5- 112016 006 310
- US-A- 5 465 022

## Beschreibung

Die Erfindung betrifft ein Verfahren zur Herstellung einer Elektrode für eine Zündvorrichtung gemäß dem Oberbegriff des Patentanspruchs 1, ein Verfahren zur Herstellung einer Zündkerze gemäß dem Oberbegriff des Patentanspruchs 15, eine Zündkerze gemäß dem Oberbegriff des Patentanspruchs 16 sowie eine Zündvorrichtung gemäß dem Oberbegriff des Patentanspruchs 18.

Aus dem Stand der Technik sind diverse Zündvorrichtungen bekannt, mit denen ein zündfähiges Medium oder ein zündfähiges Gemisch durch Aufbringung eines Funkens aus einer Elektrode entzündet wird. Die bei der Zündung expandierenden Gase bewirken eine Änderung der Druckverhältnisse, was dann meist in mechanische Arbeit umgewandelt wird. So finden derartige Zündvorrichtungen beispielsweise bei Kraftfahrzeugen, Gasmotoren oder anderen aus dem Stand der Technik bekannten Vorrichtungen Verwendung.

Aus dem Stand der Technik sind ebenfalls Verfahren zur Herstellung derartiger Zündvorrichtungen bekannt. Bei aus dem Stand der Technik bekannten Verfahren wird, beispielsweise bei Zündkerzen, ein Zündspalt zwischen zwei Elektroden, z. B. zwischen Mittel- und Massenelektrode umfassend Edelmetallelektroden, ausgebildet. An den Edelmetallelektroden wird sodann ein Potenzialunterschied angelegt und über den Zündspalt ein Funke erzeugt. Die Edelmetallelektroden bestehen dabei meist aus Platin- oder Iridiumlegierungen oder auch anderen Legierungen, die auf einem Nickel-Träger angeordnet sind. Die Verbindung zwischen dem Nickel-Träger und der Edelmetallelektrode wird im Stand der Technik durch Laserschweißen hergestellt. Die Laserschweißung bewirkt ausgehend von der Objektoberfläche, eine stoffschlüssige, linienförmige Verbindung zwischen der Edelmetallelektrode und dem Träger mit geringer Verbindungstärke im Zentrum der Berührungsflächen.

Aus der EP 2738890 A1 (TANAKA PRECIOUS METAL IND) vom 04. Juni 2014, der DE 112019000377 T5 (NGK SPARK PLUG CO) vom 17. September 2020, der US 6750597 B1 (SAKURA, A.) vom 15. Juni 2004, der EP 3139457 A1 (NGK SPARK PLUG CO) vom 08. März 2017, der DE 112016006310 T5 (NGK SPARK PLUG CO) vom 11. Oktober 2018, der US 5 465 022 A (KATOH AKIO [JP] ET AL) vom 7. November 1995 und der EP 3 196 995 Al (TANAKA PRECIOUS METAL IND [JP]) vom 26. Juli 2017 sind jeweils Verfahren sowie Zündkerzen bekannt, bei denen eine Edelmetallelektrode an einem Trägerwerkstoff mittels einer Schweißverbindung befestigt wird.

Nachteil der aus dem Stand der Technik bekannten Verfahren ist allerdings, dass die Verbindung zwischen den Edelmetallelektroden und dem Träger an der Schweißnaht zu Korrosion neigt und daher ein spezieller Schutz notwendig ist. Ein derartiges Verfahren zur Herstellung einer Zündkerze mittels eines Schweißverfahrens ist beispielsweise aus der EP 3694684 A1 bekannt, in der die entstandene Schweißnaht dann einer Nachbehandlung zum Schutz vor Korrosion unterzogen wird.

Ein weiterer Nachteil der aus dem Stand der Technik bekannten Verbindungsverfahren liegt darin, dass bei Schweißverfahren oft Lunker in der Schweißnaht auftreten, die die Festigkeit der Verbindung herabsetzen. Weiters kommt es bei einer Schweißverbindung oft zur Rissbildung in der Wärmeeinflusszone, die ebenfalls die Festigkeit der Schweißverbindung herabsetzen kann. In der Praxis hat sich daher gezeigt, dass Zündvorrichtungen nach dem Stand der Technik meist eine geringe Lebensdauer aufweisen und sehr stark zu hohem Verschleiß, starker Korrosion und in vielen Fällen zu einer Ablösung des Edelmetallplättchens neigen. Daher ist es im Stand der Technik nötig, die Zündkerzen in regelmäßigen, kurzen Zeitabständen zu inspizieren bzw. zu tauschen, was zu einem hohen Wartungsaufwand und zu häufigen Stillstandzeiten führt, womit ein wirtschaftlicher Betrieb schwer beeinträchtigt ist.

Ebenfalls nachteilig ist, dass bei der Erzeugung einer ungleichmäßigen Verbindung der beiden Werkstoffe mittels einer Schweißnaht die beiden Werkstoffe nur punktuell aufgeschmolzen werden und derart ein Verzug und/oder innere Spannungen durch die ungleichmäßige Ableitung von eingebrachter Wärme entlang der Schweißnaht bzw. der Wärmeeinflusszone entsteht bzw. entstehen. Dies führt im Betrieb zu einer ungleichmäßigen Wärmeabfuhr und punktuellen Überhitzung der Verbindungsstelle, sowie zu mechanischen Spannungen infolge von Wärmedehnung in der Verbindungszone, wodurch eine Ablösung des Edelmetallplättchens begünstigt wird.

Aufgabe der vorliegenden Erfindung ist es daher, ein Verfahren zur Herstellung einer Zündvorrichtung bereitzustellen, das eine höhere Lebensdauer von Zündvorrichtungen, insbesondere für Zündvorrichtungen in Form von Zündkerzen, ermöglicht.

Diese Aufgabe wird bei einem Verfahren gemäß dem Oberbegriff des Patentanspruchs 1 mit den kennzeichnenden Merkmalen gelöst.

Wenn die Fügetemperatur unterhalb der Schmelztemperatur des Trägerwerkstoffs und des Elektrodenwerkstoffs liegt, wird eine besondere Verbindung zwischen dem Elektrodenwerkstoff und dem Trägerwerkstoff bewirkt, indem eine Diffusion einzelner Atome bzw. Ionen der Werkstoffe in den jeweils anderen Werkstoff, beispielsweise des Trägerwerkstoffs in den Elektrodenwerkstoff oder umgekehrt, bewirkt wird. Durch die Diffusionsvorgänge wird auf diese Weise entlang bzw. innerhalb der Fügefläche eine besonders starke flächige Verbindung ausgebildet.

Durch die erfindungsgemäßen Merkmale ist es möglich, eine Verbindung zwischen dem Trägerwerkstoff und dem Elektrodenwerkstoff herzustellen, die durch die flächige Verbindung der beiden Werkstoffe eine hohe Festigkeit aufweist. Durch die flächige Verbindung in Form einer metallischen Bindung wird weiters die Gefahr von Rissbildung und das Auftreten von Korrosion im Fügebereich und damit speziell der ungeplante oder übermäßig häufige Wartungsaufwand reduziert und es werden Kosten beim Erneuern von Zündkerzen bzw. beim Austausch von Teilen vermieden oder der gesamten Zündvorrichtung bzw. einer Zündkerze reduziert. Durch die gleichmäßige Erhitzung der Fügefläche wird auch das Einbringen thermischer Spannungen in die Fügefläche vermieden, sodass Spannungsrisse und innere Spannungen in der flächigen Verbindung zwischen dem Elektrodenwerkstoff und dem Trägerwerkstoff sowie ein Verzug der Bauteile vermieden werden.

Durch die gleichmäßige Erhöhung der Temperatur auf die Fügetemperatur und den Entfall eines punkt- oder linienförmigen Schmelzbades in der Fügefläche wie im Fall des Schmelzschweißens ist es weiters auch möglich, die Wärmezufuhr besser zu kontrollieren und somit die Bauteile, insbesondere den Elektrodenwerkstoff, kleiner bzw. dünner auszubilden. Da insbesondere der Elektrodenwerkstoff aus teuren Edelmetallen besteht oder bestehen kann, führt dies zu einer wesentlichen Reduzierung der Materialkosten. Durch das erfindungsgemäße Verfahren können somit im Gegensatz zum bisherigen aus dem Stand der Technik bekannten Laserschweißen auch Dicken des Elektrodenwerkstoffs von unter 0,5 mm verarbeitet werden.

Weiters hat sich nach Untersuchungen an nach dem erfindungsgemäßen Verfahren hergestellten Zündvorrichtungen gezeigt, dass diese im Vergleich zum Stand der Technik eine wesentlich höhere Standzeit aufweisen.

Im Zusammenhang mit der vorliegenden Erfindung wird die Fügezeit als eine Zeitspanne definiert, in der die Fügetemperatur beibehalten wird und/oder größer oder gleich einer Schwelltemperatur, insbesondere von 30 % der Schmelztemperatur des Träger- und/oder Elektrodenwerkstoffs, ist, wobei vor und/oder nach der Fügezeit auch weitere Temperaturprofile an der Fügefläche vorliegen können. So kann beispielsweise eine Aufheizphase und/oder eine Abkühlphase voran- bzw. nachgestellt sein und/oder die Fügetemperatur auch in einem gewissen Bereich variiert werden. Die Fügetemperatur wird im Zusammenhang mit der Erfindung nicht nur als konstante Temperatur verstanden, sondern kann auch während der Fügezeit verändert werden. Als Fügetemperatur wird diejenige Temperatur bzw. werden diejenigen Temperaturen verstanden, bei der bzw. denen eine Verbindung zwischen dem Elektrodenwerkstoff und dem Trägerwerkstoff erzeugt werden kann. Im Zuge der Untersuchungen, die der vorliegenden Erfindung zu Grunde liegen, wurde überraschend herausgefunden, dass die Fügetemperatur bei den meisten erprobten Werkstoffen dabei oberhalb von 30 % aber unterhalb von 50 % deren Schmelztemperatur, insbesondere der Schmelztemperatur des Werkstoffs mit der höheren Schmelztemperatur, liegt. Weiters wurde herausgefunden, dass höhere Temperaturen den Verbindungsprozess beschleunigen und somit die Fügezeit in Abhängigkeit der Temperatur reduziert werden kann.

Unter flächiger Verbindung wird im Zusammenhang mit der vorliegenden Erfindung verstanden, dass der Trägerwerkstoff und der Elektrodenwerkstoff entlang der gesamten Fügefläche, also über die gesamte Fläche, an denen sich der Trägerwerkstoff und der Elektrodenwerkstoff berühren, eine flächige, insbesondere vollflächige, und gleichmäßige Verbindung in Form einer metallischen Bindung ausbilden. Die mit dem erfindungsgemäßen Herstellungsverfahren hergestellten Elektroden weisen also nicht nur an den Randzonen der Fügefläche linienförmig wie bei einer Schweißnaht verbundene Teilabschnitte aus, sondern sind zumindest in einem Großteil der Fügefläche, insbesondere über die gesamte Fügefläche, miteinander flächig bzw. vollflächig und gleichmäßig verbunden.

Ein vollflächiger Verbund zwischen dem Elektrodenwerkstoff und dem Trägerwerkstoff erzielt darüber hinaus auch eine höhere Wärmeleitung und damit kühlere Elektroden im Einsatz.

Eine allfällige Funkenerosion kann bei Zündvorrichtungen unerwünscht im Randbereich der Elektroden auftreten, was bei linienförmiger Verbindung durch deren Begrenzung auf den Randbereich der Fügefläche zu einer Herabsetzung der Lebensdauer führt. Im Gegensatz dazu stellt Funkenerosion bei einer flächigen Verbindung, wie bei mit dem erfindungsgemäßen Verfahren hergestellten Elektroden, einen vernachlässigbaren Effekt dar.

Besonders vorteilhafte Ausführungsformen des erfindungsgemäßen Verfahrens werden durch die Merkmale der abhängigen Ansprüche näher definiert:
Bevorzugt wird bei dem erfindungsgemäßen Verfahren die Wärmemenge, die an die Fügefläche, insbesondere den Trägerwerkstoff und den Elektrodenwerkstoff, zur Erhöhung auf die Fügetemperatur abgegeben wird, mittels Induktion, Strahlungswärme oder Wärmeleitung erzeugt.

Es kann bevorzugt vorgesehen sein, dass die Fügetemperatur derart für eine Fügezeit beibehalten wird, sodass eine metallische Verbindung auf Basis einer metallischen Bindung ohne Ausbildung von intermetallischen Phasen zwischen dem Trägerwerkstoff und dem Elektrodenwerkstoff ausgebildet wird, wobei insbesondere die Diffusion von Atomen und/oder Ionen des Elektrodenwerkstoffs in den Trägerwerkstoff und/oder die Diffusion von Atomen und/oder Ionen des Trägerwerkstoffs in den Elektrodenwerkstoff größer gleich 0,05 µm, insbesondere zwischen 1 µm und 100 µm, besonders bevorzugt zwischen 20 µm und 40 µm, beträgt. Durch die erwirkte sogenannte Diffusionsverbindung wird eine besonders starke metallische Verbindung zwischen dem Trägerwerkstoff und dem Elektrodenwerkstoff bewirkt, die dabei keine intermetallischen Phasen zwischen den beiden Werkstoffen hervorruft. Da keine intermetallischen Phasen gebildet werden, wird auch eine Schwächung der Werkstoffe bzw. der Verbindung zwischen den beiden Werkstoffen verhindert, sodass Riss- und Lunkerbildungen und andere festigkeitsmindernde Effekte verhindert werden.

Mit Diffusion wird in diesem Zusammenhang verstanden, wie tief die Atome und/oder Ionen des Trägerwerkstoffs und/oder des Elektrodenwerkstoffs in den jeweils anderen Werkstoff eindringen. Dies kann auch alternativ als Diffusionstiefe bezeichnet werden.

Vorteilhaft hat sich herausgestellt, dass der Trägerwerkstoff und der Elektrodenwerkstoff mit einer Mindestflächenpressung von 10 mN/mm² bis 2500 mN/mm², insbesondere von 100 mN/mm² bis 600 mN/mm², aneinander angepresst werden.

Um den negativen Einfluss von störenden Atmosphären effektiv verhindern zu können und eine vorteilhafte Ausbildung der Verbindung an der Fügefläche zu bewirken, kann vorgesehen sein, dass das Verfahren unter Vakuum, einem Unterdruck, und/oder unter einer sauerstoffreduzierten, insbesondere sauerstofffreien, und/oder unter einer inerten und/oder unter einer reduzierenden Atmosphäre durchgeführt wird, wobei das Vakuum, der Unterdruck, und/oder die sauerstoffreduzierte, insbesondere sauerstofffreie, und/oder inerte und/oder reduzierende Atmosphäre im Laufe des Verfahrens verändert wird.

In einer vorteilhaften Ausführungsform kann vorgesehen sein, dass die Fügetemperatur 30 % bis 98 %, insbesondere 50 % bis 98 %, besonders bevorzugt 75 % bis 95 %, der Schmelztemperatur des Trägerwerkstoffs und/oder des Elektrodenwerkstoffs beträgt.

Eine effektive Verbindung der beiden Werkstoffe kann besonders effizient erfolgen, indem die Fügezeit nach Überschreiten der Schwelltemperatur von 30 % der Schmelztemperatur des Träger- und/oder Elektrodenwerkstoff 1 min bis 24 h, insbesondere 1 h bis 4 h, besonders bevorzugt 1 h bis 2 h, beträgt. So kann vorgesehen sein, dass erst nach Überschreiten einer Schwelltemperatur die Fügezeit gemessen wird bzw. die Fügetemperatur für die Fügezeit konstant und/oder oberhalb der Schwelltemperatur gehalten wird.

In einer optionalen Ausführungsform des Verfahrens kann vorgesehen sein, dass die Fügefläche eine Größe von 1 mm² bis 50 mm², insbesondere 2 mm² bis 30 mm², besonderes bevorzugt von 2 mm² bis 15 mm², aufweist.

Durch das erfindungsgemäße Verfahren ist es möglich, dass der Elektrodenwerkstoff eine Dicke von 0,05 mm bis 2 mm, insbesondere 0,05 mm bis 0,5 mm, besonders bevorzugt von 0,05 mm bis 0,25 mm, aufweist. So können durch die besonders dünne Ausbildung des Elektrodenwerkstoffs die positiven Eigenschaften des Elektrodenwerkstoffs bei geringen Materialkosten realisiert werden.

Eine effektive Verbindung der beiden Werkstoffe wird insbesondere bereitgestellt, indem der Elektrodenwerkstoff aus einem Werkstoff der Elementengruppe 4 bis 11 oder der Titan-, Vanadium-, Chrom-, Mangan,- Eisen-, Cobalt-, Nickel- oder Kupfergruppe, insbesondere aus Platin, Iridium, Rhodium, Ruthenium, Rhenium oder aus Legierungen daraus, besteht, besonders bevorzugt aus PtRh 90/10 und IrRh 90/10 der Firma Heraeus. Unter "Elementengruppe" wird im Zusammenhang mit der vorliegenden Erfindung die jeweilige Gruppe des Periodensystems verstanden, die auch als Haupt- und Nebengruppen bezeichnet werden, in der jeweils alle Elemente die gleiche Anzahl von Valenzelektronen haben. Eine erfindungsgemäße Definition des Begriffs "Elementengruppe" bzw. "Gruppe des Periodensystems" oder auch "Gruppen im Periodensystem der Elemente" kann im Lehrbuch [Handbuch Maschinenbau, Alfred Böge, 2011, ISBN 978-3-8348-1025-0] oder auf Wikipedia aufgefunden werden.

Eine optionale Ausführungsform des erfindungsgemäßen Verfahrens wird bereitgestellt, indem ein Lotmaterial auf und/oder neben die Fügefläche vor oder nach der Positionierung des Elektrodenwerkstoffs auf dem Trägerwerkstoff aufgebracht oder angebracht oder eingebracht wird, wobei die Fügetemperatur oberhalb der Schmelztemperatur des Lots und jeweils unterhalb der Schmelztemperatur des Trägerwerkstoffs und des Elektrodenwerkstoffs liegt, wobei insbesondere die Fügezeit nach Überschreiten der Schmelztemperatur des Lotmaterials 10 Sekunden bis 2 Stunden, bevorzugt 1 Minute bis 60 Minuten, beträgt. Durch die Einbringung des Lots auf und/oder neben die Fügefläche wird bewirkt, dass die beiden Werkstoffe über das Lotmaterial eine vorteilhafte, flächige Verbindung ausbilden, die auch bei Einwirkung von thermischen bzw. inneren Spannungen und Zündkräften bzw. bei Fließen des Zündstroms zuverlässig erhalten bleibt. Die Fügezeit wird beim Lötvorgang als diejenige Zeitspanne verstanden, bei der die Temperatur der Fügefläche, des Elektrodenwerkstoffs und/oder des Trägerwerkstoffs und/oder des Lotwerkstoffs oberhalb der Schmelztemperatur des Lots gehalten wird.

Vorteilhaft ist dabei vorgesehen, dass das Lotbasismaterial des Lotmaterials aus einem Werkstoff der Elementengruppe 9 bis 11 oder der Cobalt-, Nickel- oder Kupfergruppe oder einer Legierung daraus ausgewählt ist, wobei das Lotbasismaterial des Lotmaterials insbesondere Legierungszusätze der Elementengruppen 4 bis 15 aufweist, wobei das Lotmaterial insbesondere aus Silber, Gold oder Nickel als Lotbasismaterial besteht und optionale Zusätze wie beispielsweise Chrom, Silizium, Eisen, Bor, Molybdän, Phosphor, Palladium und/oder Kupfer bzw. Kombinationen davon aufweist, wobei das Lotmaterial bevorzugt Ag 99,99 oder NiCrSiBFe oder NiCrSi ist.

Eine optionale Ausführungsform des Verfahrens sieht vor, dass der Trägerwerkstoff eine Vertiefung aufweist, wobei der Elektrodenwerkstoff, bei Anlegen an den Trägerwerkstoff, zumindest teilweise in der Vertiefung versenkt angeordnet wird. Durch die Ausbildung von Vertiefungen bzw. einer Vertiefung im Trägerwerkstoff kann der Elektrodenwerkstoff einfach positioniert werden und derart optional eine Erstreckung der Fügefläche über die seitlichen Kanten des Elektrodenwerkstoffs bzw. Trägerwerkstoffs auf die Seitenflächen der Vertiefung erzielt werden.

Eine weitere optionale Ausführungsform des erfindungsgemäßen Verfahrens sieht vor, dass auf dem Trägerwerkstoff oder auf dem Elektrodenwerkstoff zwischen dem Trägerwerkstoff und dem Elektrodenwerkstoff ein Zwischenwerkstoff angeordnet ist, wobei die Fügefläche jeweils zwischen dem Trägerwerkstoff und dem Zwischenwerkstoff und dem Elektrodenwerkstoff und dem Zwischenwerkstoff ausgebildet wird, wobei die Fügetemperatur unterhalb der Schmelztemperatur des Trägerwerkstoffs und des Elektrodenwerkstoffs und des Zwischenwerkstoffs liegt, wobei jeweils der Trägerwerkstoff mit dem Zwischenwerkstoff und der Elektrodenwerkstoff mit dem Zwischenwerkstoff eine flächige Verbindung miteinander ausbilden. So können über den Zwischenwerkstoff auch Werkstoffe, die sonst untereinander eine schlechte Verbindung eingehen, miteinander verbunden werden und so die Werkstoffe über den Zwischenwerkstoff eine flächige Verbindung in Form einer metallischen Bindung miteinander ausbilden.

Optional kann vorgesehenen sein, dass der Zwischenwerkstoff als diffusionsbeschleunigender Werkstoff, insbesondere Silber oder Kupfer, ausgebildet ist, wobei die Diffusion von Atomen und/oder Ionen des Elektrodenwerkstoffs durch den Zwischenwerkstoff in den Trägerwerkstoff und/oder die Diffusion von Atomen und/oder Ionen des Trägerwerkstoffs durch den Zwischenwerkstoff in den Elektrodenwerkstoff durch den Zwischenwerkstoff beschleunigt wird. Durch den als Diffusionsbeschleuniger ausgebildeten bzw. wirkenden Zwischenwerkstoff kann die Diffusion von Atomen und/oder Ionen des Elektrodenwerkstoffs durch den Zwischenwerkstoff in den Trägerwerkstoff und/oder die Diffusion von Atomen und/oder Ionen des Trägerwerkstoffs durch den Zwischenwerkstoff in den Elektrodenwerkstoff beschleunigt werden.

Optional kann vorgesehen sein, dass der Trägerwerkstoff und/oder der Elektrodenwerkstoff und/oder der Zwischenwerkstoff an der Fügefläche einen Mittenrauwert Ra von 0,01 µm bis 6,3 µm, insbesondere von 0,02 µm bis 0,5 µm, aufweist. Durch die vorteilhafte Oberflächenbeschaffenheit der Werkstoffe wird eine besonders vorteilhafte, flächige Verbindung zwischen den Werkstoffen bewerkstelligt und insbesondere die Diffusion bzw. die Diffusionsverbindung verbessert.

Um eine Vielzahl von Elektroden gleichzeitig herstellen zu können, kann vorgesehen sein, dass eine Mehrzahl von Trägerwerkstoffen und Elektrodenwerkstoffen paarweise jeweils zu einem Stack gestapelt angeordnet werden, wobei die paarweise zu verbindenden Trägerwerkstoffe und die Elektrodenwerkstoffe jeweils zu anderen Paaren durch einen Trennwerkstoff und/oder eine Trennschicht untereinander getrennt sind. Der Trennwerkstoff bzw. die Trennschicht geht während dem Verfahren keine Verbindung mit dem Elektroden- oder Trägerwerkstoff ein, sodass die beiden Werkstoffe sich jeweils vom Trennwerkstoff bzw. von der Trennschicht einfach abheben, ablösen bzw. trennen lassen.

Ein weiterer Aspekt der vorliegenden Erfindung sieht vor, ein Verfahren zur Herstellung einer Zündkerze bereitzustellen, die im Vergleich zum Stand der Technik eine höhere Lebensdauer sowie eine Verbindung mit höherer Festigkeit zwischen dem Elektrodenwerkstoff und dem Trägerwerkstoff aufweist.

Diese Aufgabe wird mit den kennzeichnenden Merkmalen des Anspruchs 15 gelöst. Erfindungsgemäß ist dabei vorgesehen, dass die Verbindung zwischen dem Träger und dem Elektrodenplättchen nach einem Verfahren gemäß erfindungsgemäßen Verfahren hergestellt wird.

Das erfindungsgemäße Verfahren zur Herstellung der Zündkerze kann einfach und kostengünstig durchgeführt werden und derart eine starke und gegen Korrosion und Rissbildung geschützte, flächige Verbindung zwischen dem Elektrodenplättchen und dem Träger hergestellt werden.

Ein weiterer Aspekt der vorliegenden Erfindung sieht vor, eine Zündkerze, insbesondere für Verbrennungskraftmaschinen oder Gasmotoren, bereitzustellen, die eine erfindungsgemäße Elektrode bzw. eine Elektrode bestehend aus einem Elektrodenwerkstoff aufweist, der besonders gut mit dem Trägerwerkstoff verbunden ist.

Diese Aufgabe wird bei einer Zündkerze gemäß dem Oberbegriff des Patentanspruchs 16 mit den kennzeichnenden Merkmalen gelöst. Erfindungsgemäß ist dabei vorgesehen, dass die Verbindung zwischen dem Träger und dem Elektrodenplättchen nach einem erfindungsgemäßen Verfahren hergestellt ist, wobei der Träger als Trägerwerkstoff und das Elektrodenplättchen als Elektrodenwerkstoff ausgebildet ist.

Die erfindungsgemäße Zündkerze weist eine besonders starke und gegen negative Einflüsse, die beim Zündprozess auftreten, geschützte Verbindung zwischen dem Träger und der Elektrode auf, sodass diese auch bei Einsatz als Hochleistungszündkerze, bei der eine hohe elektrische Potenzialdifferenz auftritt und gleichzeitig eine hohe thermische Belastbarkeit erforderlich ist, mit einer hohen Lebensdauer und Zuverlässigkeit eingesetzt werden kann. Die erfindungsgemäße Zündkerze kann dabei hohen elektrischen Potenzialdifferenzen und gleichzeitig hohen thermischen Belastungen bzw. Wechselbeanspruchungen Stand halten.

Eine vorteilhafte Ausführungsform der erfindungsgemäßen Zündkerze kann bereitgestellt werden, indem der Träger aus einer Nickel- oder Chrom-Nickel-Legierung oder Stahl, bevorzugt aus Nickel in reiner Form, Nickelbasislegierungen, FeCrNi- oder FeCrNiMo-Edelstählen, gebildet ist und wobei das Elektrodenplättchen aus einem Edelmetall, insbesondere Platin, Iridium, Rhodium, Ruthenium, Rhenium oder einer Legierung daraus, insbesondere Platin/Rhodium-, Platin/Rhenium-, Platin/Iridium-, Iridium/Rhenium- oder Iridium/Rhodium-Legierungen, gebildet ist, wobei besonders bevorzugt das Elektrodenplättchen eine Legierung aus PtRh 90/10 oder eine Legierung aus IrRh 90/10 und der Träger eine Legierung aus VDM Nickel 201 bzw. EN 2.4068 aufweist.

Ein weiterer Aspekt der Erfindung sieht vor, eine Zündvorrichtung mit einer vorteilhaften Verbindung zwischen dem Träger und dem Elektrodenplättchen bereitzustellen. Diese Aufgabe wird mit den kennzeichnenden Merkmalen des Anspruchs 18 gelöst; erfindungsgemäß ist dabei vorgesehen, dass der Träger und das Elektrodenplättchen eine flächige, insbesondere vollflächige, gleichmäßige Verbindung miteinander aufweisen, wobei insbesondere der Träger als Trägerwerkstoff und das Elektrodenplättchen als Elektrodenwerkstoff ausgebildet ist, wobei im Bereich der flächigen Verbindung zwischen dem Träger und dem Elektrodenplättchen eine Diffusionszone ausgebildet ist, an der eine Konzentration des Werkstoffs des Trägers ausgehend vom Träger in Richtung des Elektrodenplättchens von 100 % bis 0 % und eine Konzentration des Werkstoffs des Elektrodenplättchens ausgehend vom Träger (in Richtung des Elektrodenplättchens) von 0 % bis 100 % vorliegt, wobei insbesondere die Diffusionstiefe größer gleich 0,05 µm, insbesondere zwischen 1 µm und 100 µm, besonders bevorzugt zwischen 20 µm und 40 µm, beträgt.

Bevorzugt ist dabei vorgesehen, dass der Träger aus einer Nickel- oder Chrom-Nickel-Legierung oder Stahl, bevorzugt aus Nickel in reiner Form, Nickelbasislegierungen, FeCrNi- oder FeCrNiMo-Edelstahl, gebildet ist und wobei das Elektrodenplättchen aus einem Edelmetall, insbesondere Platin, Iridium, Rhodium, Ruthenium, Rhenium oder einer Legierung daraus, insbesondere Platin/Rhodium-, Platin/Rhenium-, Platin/Iridium-, Iridium/Rhenium- oder Iridium/Rhodium-Legierungen, gebildet ist, wobei besonders bevorzugt das Elektrodenplättchen eine Legierung aus PtRh 90/10 und oder das Elektrodenplättchen eine Legierung aus IrRh 90/10 und der Träger eine Legierung aus VDM Nickel 201 bzw. EN 2.4068 aufweist.

Weitere Vorteile und Ausgestaltungen der Erfindung ergeben sich aus der Beschreibung und den beiliegenden Zeichnungen.

Die Erfindung ist im Folgenden anhand von besonders vorteilhaften aber nicht einschränkend zu verstehenden Ausführungsbeispielen in den Zeichnungen schematisch dargestellt und wird unter Bezugnahme auf die Zeichnungen beispielhaft beschrieben:

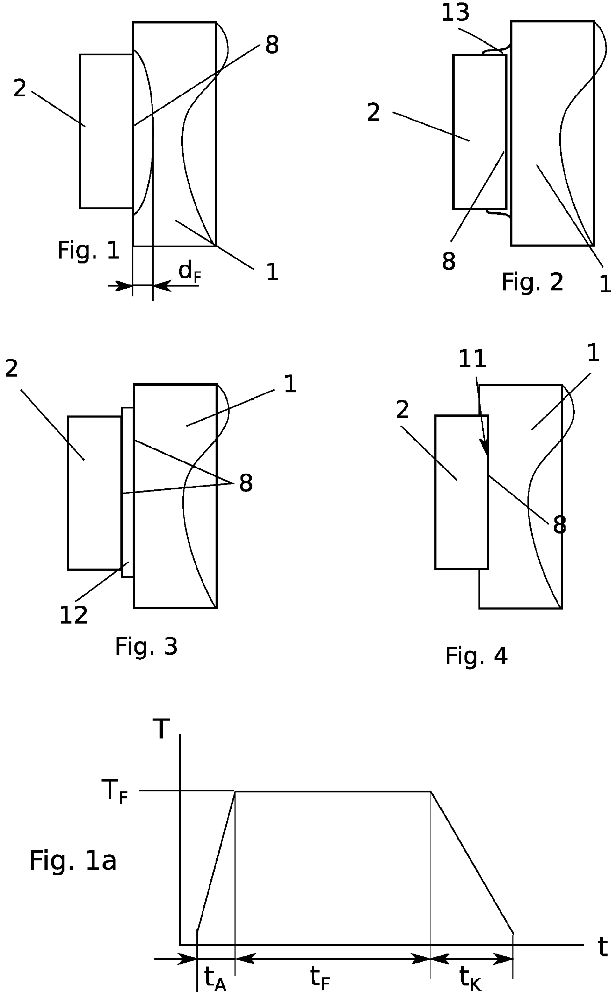

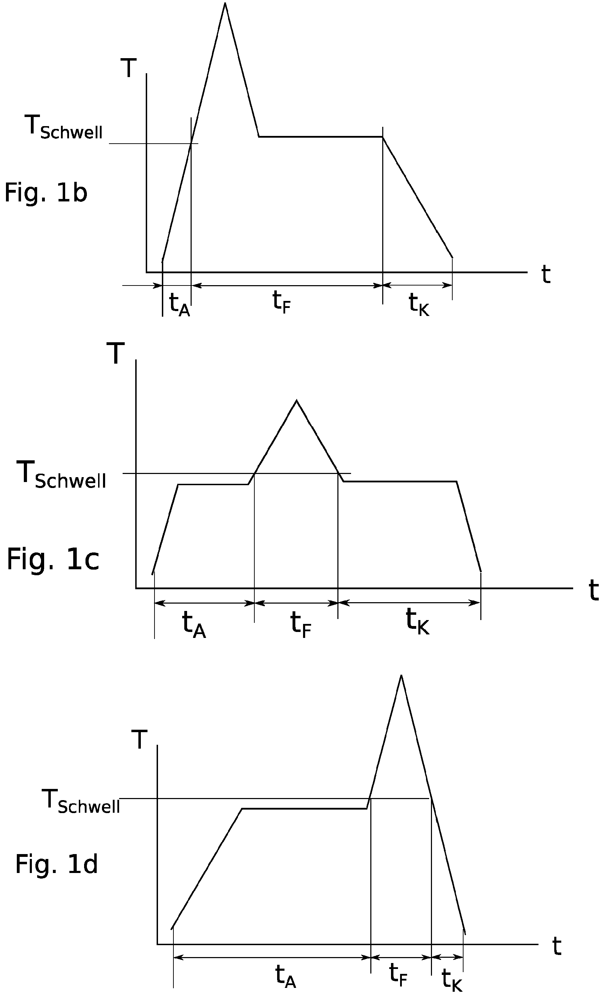

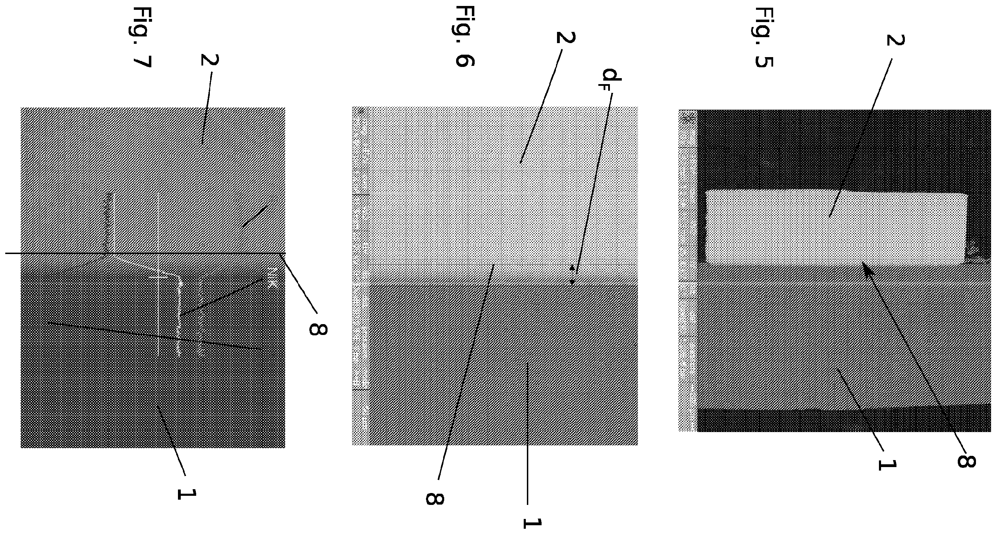

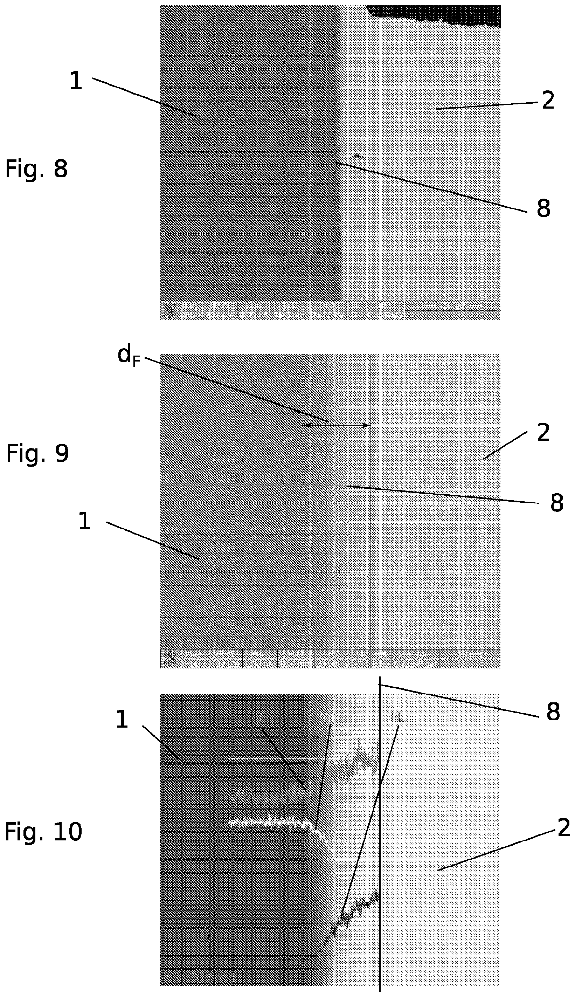

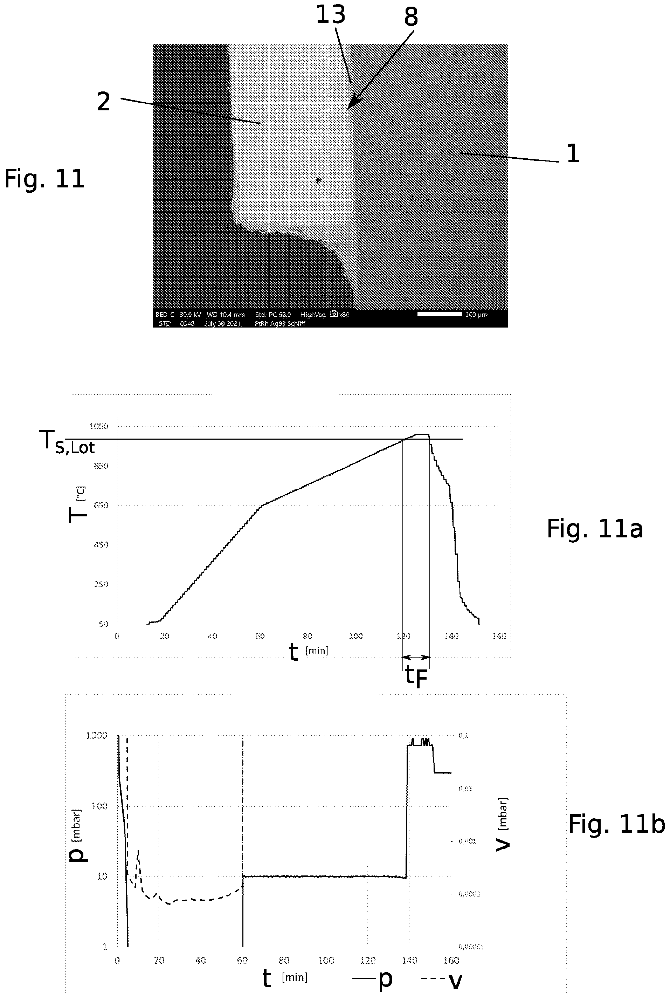

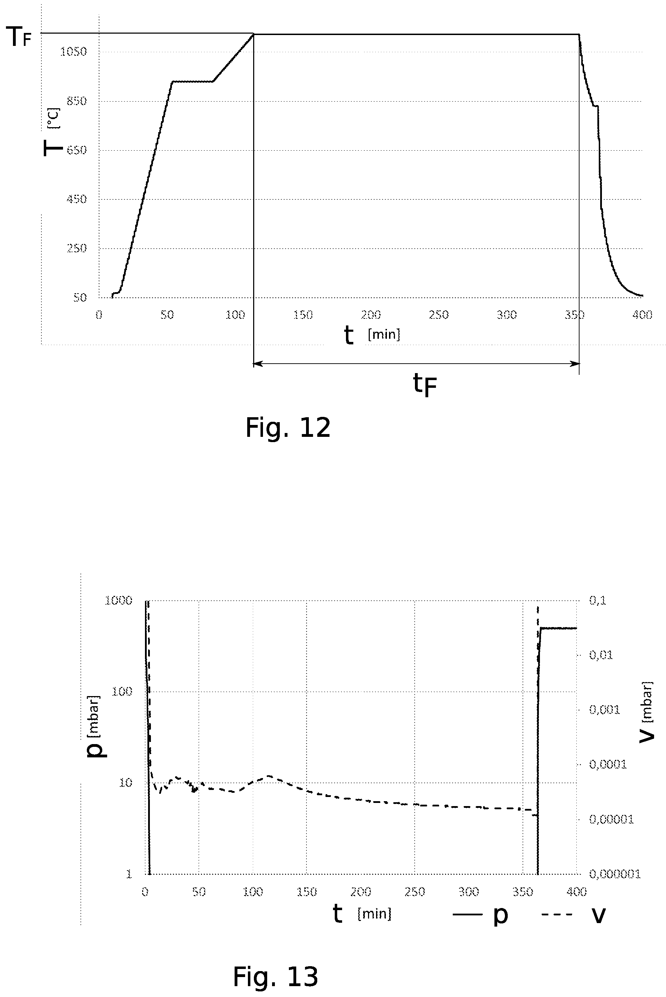

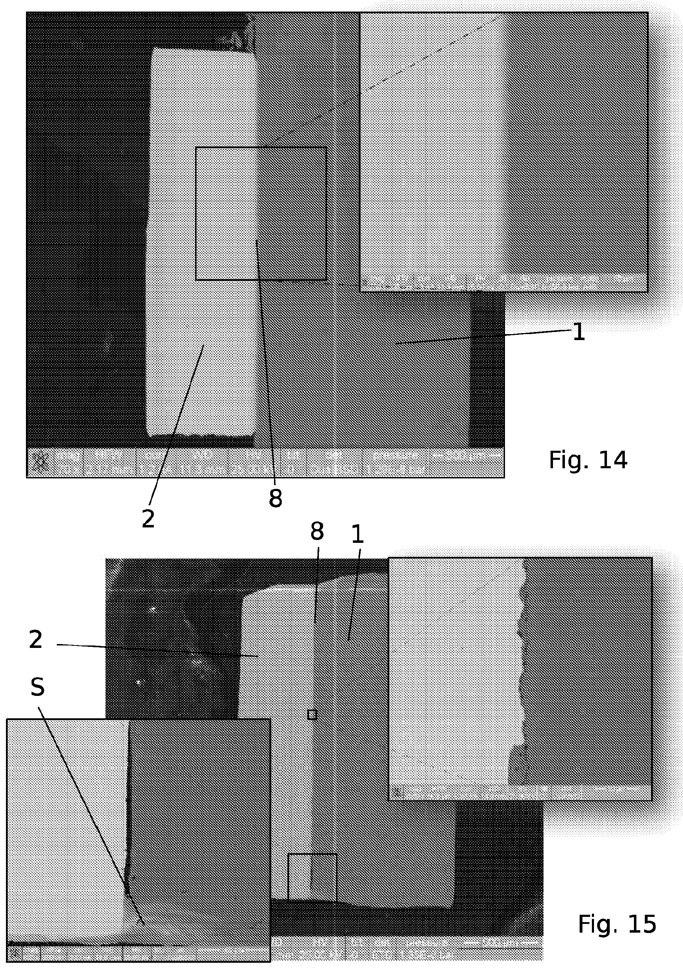

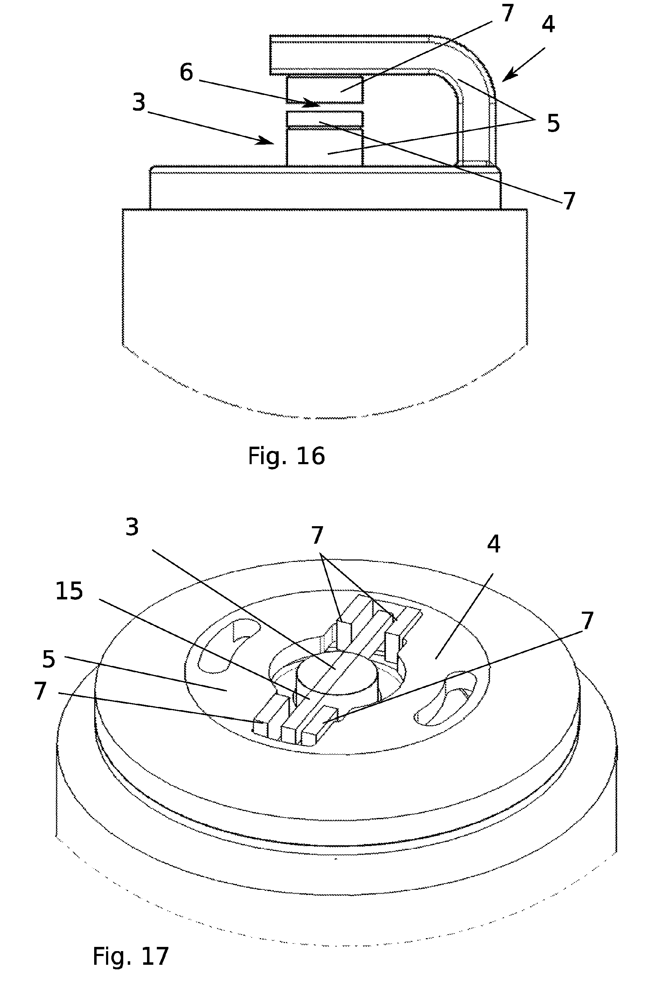

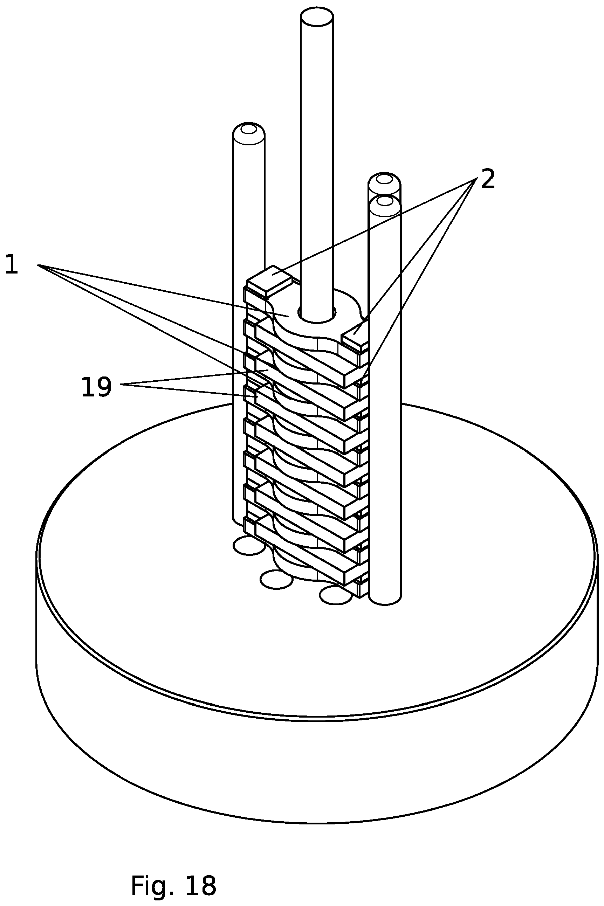

Fig. 1 zeigt eine Elektrode, hergestellt nach dem erfindungsgemäßen Verfahren in schematischer Darstellung, Fig. 1a bis Fig. 1d zeigen unterschiedliche Temperatur-ZeitDiagramme von Herstellungsverfahren einer erfindungsgemäßen Elektrode in vereinfachter Darstellung, Fig. 2 zeigt eine mittels eines Lots hergestellte Elektrode in schematischer Darstellung, Fig. 3 zeigt eine Elektrode mit einem Zwischenwerkstoff, Fig. 4 zeigt eine schematische Ansicht einer Elektrode mit Vertiefung, Fig. 5 zeigt eine Aufnahme einer erfindungsgemäßen Elektrode unter dem Elektronenmikroskop (FEI Quanta 3D 200 Rasterelektronenmikroskop), Fig. 6 zeigt eine weitere Aufnahme unter einem Elektronenmikroskop mit höherer Vergrößerung gemäß Fig. 5, Fig. 7 zeigt die Verteilung der einzelnen Elemente im Bereich der Fügefläche einer Elektrode gemäß Fig. 5 und 6, Fig. 8 zeigt eine weitere Aufnahme unter einem Elektronenmikroskop einer Ausführungsform einer erfindungsgemäßen Elektrode, Fig. 9 zeigt eine Aufnahme der Elektrode gemäß Fig. 8 in höherer Vergrößerung, Fig. 10 zeigt die Verteilung der Elemente im Bereich der Fügefläche einer Elektrode gemäß Fig. 8 und 9, Fig. 11 zeigt eine Aufnahme unter einem Elektronenmikroskop (JEOL-JSM-IT200-LA mit EDX-Einheit) einer durch Löten hergestellten, erfindungsgemäßen Elektrode, Fig.11a zeigt den Temperaturverlauf des Herstellungsverfahrens der in Fig.11 abgebildeten Elektrode, Fig. 11b zeigt den Druckverlauf und die Vakuumbedingungen des Herstellungsverfahrens der in Fig.11 abgebildeten Elektrode, Fig. 12 zeigt ein Diagramm des Temperaturverlaufs einer Ausführungsform des Herstellungsverfahrens einer Elektrode gemäß Fig. 5 bis Fig 10, Fig. 13 zeigt ein Diagramm des Druckverlaufs und der Vakuumbedingungen der Ausführungsform des erfindungsgemäßen Herstellungsverfahrens gemäß Fig. 12, Fig. 14 zeigt eine Aufnahme eines Schliffbildes einer erfindungsgemäßen Elektrode, Fig. 15 zeigt ein Schliffbild einer Elektrode einer Zündkerze aus dem Stand der Technik, Fig. 16 zeigt eine erfindungsgemäße Zündkerze in schematischer Darstellung, Fig. 17 zeigt eine alternative Ausführungsform der erfindungsgemäßen Zündkerze in isometrischer Ansicht und Fig. 18 eine Ausführungsform des erfindungsgemäßen Herstellungsverfahrens zur Herstellung von mehreren Elektroden.

In Fig. 1 ist eine erste erfindungsgemäße Elektrode für eine Zündvorrichtung in schematischer Darstellung abgebildet. Die Elektrode weist einen metallischen Trägerwerkstoff 1 auf, der an einer Fügefläche 8 mit einem ebenfalls metallischen Elektrodenwerkstoff 2 verbunden ist. Die in Fig. 1 dargestellte Elektrode wurde nach dem erfindungsgemäßen Verfahren hergestellt. Zur Herstellung der Elektrode wurde der metallische Elektrodenwerkstoff 2 an einer Fügefläche 8 an den metallischen Trägerwerkstoffs 1 angelegt, sodass dieser flächig auf dem Trägerwerkstoff 1 aufliegt. Der Trägerwerkstoff 1 und der Elektrodenwerkstoff 2 werden dabei an der Fügefläche 8 mit einer definierten Flächenpressung aneinander angepresst und in einer Kammer, in der ein Unterdruck, ein Vakuum und/oder eine definierte Atmosphäre erzeugt werden kann, positioniert. Nach Positionierung des Trägerwerkstoffs 1 und des Elektrodenwerkstoffs 2 wird in der Kammer ein Unterdruck bzw. eine definierte Atmosphäre appliziert. Nach Aufbringung der definierten Atmosphäre bzw. des Unterdrucks wird die Fügefläche 8 auf eine Fügetemperatur T_{F} erhitzt und diese über eine definierte Fügezeit t_{F} beibehalten. Durch das Anpressen des Elektrodenwerkstoffs 2 an den Trägerwerkstoff 1 sowie die Erhitzung auf die Fügetemperatur T_{F} wird eine flächige Verbindung des Trägerwerkstoffs 1 mit dem Elektrodenwerkstoff 2 bewirkt. Die Fügetemperatur T_{F} liegt bei dem erfindungsgemäßen Verfahren unterhalb der Schmelztemperatur T_{S} des Trägerwerkstoffs 1 und unterhalb der Schmelztemperatur T_{S} des Elektrodenwerkstoffs 2.

Die in Fig. 1 dargestellte Elektrode wurde durch einen sogenannten Diffusionsverbindungsvorgang hergestellt, wobei die Fügetemperatur T_{F} stets unterhalb der Schmelztemperatur T_{S} des Trägerwerkstoffs 1 und unterhalb der Schmelztemperatur T_{S} des Elektrodenwerkstoffs 2 liegt. Die Fügetemperatur T_{F} wird dabei für die Fügezeit t_{F} beibehalten, sodass eine metallische Verbindung in Form einer metallischen Bindung ohne Ausbildung von intermetallischen Phasen zwischen dem Trägerwerkstoff 1 und dem Elektrodenwerkstoff 2 ausgebildet wird. Das Halten der Fügetemperatur T_{F} für eine Fügezeit t_{F} bewirkt, dass Atome und/oder Ionen des Elektrodenwerkstoffs 2 in den Trägerwerkstoff 1 oder umgekehrt eindringen. Dieser sogenannte Diffusionseffekt wurde überraschenderweise bei Versuchen, die der vorliegenden Erfindung zugrunde liegen, festgestellt. Dabei wurde ermittelt, dass Atome bzw. Ionen, je nach Werkstoffpaarung, des Elektrodenwerkstoffs 2 in den Trägerwerkstoff 1 und/oder umgekehrt diffundieren und eine Diffusionstiefe d_{F} von zumindest 0,05 µm und mehr erreichen.

Wie im Diagramm der Fig. 1a dargestellt, wird nach dem Anlegen des Elektrodenwerkstoffs 2 an dem Trägerwerkstoff 1 und dem Applizieren des Unterdrucks bzw. der Atmosphäre die Fügefläche 8 bzw. der gesamte Trägerwerkstoff 1 und der gesamte Elektrodenwerkstoff 2 erhitzt. Nach einer Aufheizzeit t_{A} wird die Fügetemperatur T_{F} erreicht und sodann für die Fügezeit t_{F} beibehalten. Die Fügezeit t_{F} wird dabei zwischen 1 Sekunde und 24 Stunden beibehalten, wobei die Fügezeit t_{F} insbesondere zwischen 1 h und 4 h, besonders bevorzugt zwischen 1 h und 2 h, beträgt. Nach Abschluss der Fügezeit t_{F} wird dann der Heizprozess beendet und die Fügefläche 8 bzw. der Elektrodenwerkstoff 2 und der Trägerwerkstoff 1 werden dann für eine Abkühlzeit t_{K} abgekühlt. Die Fügetemperatur T_{F} beträgt erfindungsgemäß zwischen 30 % und 98 % der Schmelztemperatur T_{S} des Trägerwerkstoffs 1 und/oder des Elektrodenwerkstoffs 2, insbesondere zwischen 50 % und 98 %, besonders bevorzugt zwischen 75 % und 95 % der Schmelztemperatur T_{S} des Trägerwerkstoffs 1 und/oder des Elektrodenwerkstoffs 2. So kann beispielsweise je nach Werkstoffpaarung die Fügetemperatur T_{F} 77 % der Schmelztemperatur des Trägerwerkstoffs 1 und 45 % der Schmelztemperatur T_{S} des Elektrodenwerkstoffs 2 betragen.

In Fig. 1b ist ein weiteres Diagramm einer möglichen Heizkurve abgebildet. Die Temperatur T wird ausgehend von einer Ausgangstemperatur von in etwa Raumtemperatur während einer Aufheizzeit t_{A} bis zu einer Schwelltemperatur T_{Schwell} erhitzt. Bei Erreichen der Schwelltemperatur T_{Schwell} beginnt die Fügezeit t_{F}, in der die Temperatur weiter beispielsweise bis zur Schmelztemperatur T_{S} eines der beiden Werkstoffe oder auch darüber hinaus erhöht und anschließend wieder abgesenkt wird. Die Temperatur T der Werkstoffe wird dann für eine Zeitspanne konstant gehalten und dann nach Ausbilden der Verbindung unter einer Abkühlzeit t_{K} wieder abgekühlt.

Wie in Fig. 1c und 1d dargestellt kann die Fügetemperatur T_{F} auch optional ausschließlich in Form einer Rampe oberhalb der Schwelltemperatur T_{Schwell} veränderlich ausgeführt werden oder auch zuerst über einen Zeitraum konstant gehalten werden und dann weiter erhöht und/oder abgesenkt werden.

Die Fügetemperatur T_{F} ist dabei jeweils diejenige Temperatur, die über der Schwelltemperatur T_{Schwell} liegt und bei der der Elektrodenwerkstoff 2 und der Trägerwerkstoff 1 beginnen, eine Verbindung auszubilden. Die Fügetemperatur T_{F} kann dabei wie in Fig. 1a gezeigt konstant oder wie in den Fig. 1b bis 1d gezeigt über die Fügezeit t_{F} veränderlich ausgebildet werden.

Zur Ausbildung der flächigen Verbindung zwischen dem Trägerwerkstoff 1 und dem Elektrodenwerkstoff 2 werden im Herstellungsprozess der Elektrode die beiden Werkstoffe an der Fügefläche 8 mit einer definierten Flächenpressung aneinander angepresst. Erfindungsgemäß hat sich dabei herausgestellt, dass sich eine Mindestflächenpressung von 10 mN/mm² bis 2500 mN/mm², insbesondere von 100 mN/mm² bis 600 mN/mm², vorteilhaft auf die Verbindungseigenschaften des Trägerwerkstoffs 1 mit dem Elektrodenwerkstoff 2 ausgewirkt haben.

Insbesondere kann abhängig von den verwendeten Werkstoffen des Elektrodenwerkstoffs 2 und des Trägerwerkstoffs 1 das Verfahren unter Vakuum, einem Unterdruck und/oder einer sauerstoffreduzierten, insbesondere sauerstofffreien, Atmosphäre durchgeführt werden. Optional kann die applizierte Atmosphäre auch inert oder eine reduzierende Atmosphäre sein. Die Fügefläche 8 weist bei dem erfindungsgemäßen Verfahren zur Herstellung einer Elektrode vorzugsweise eine Größe von 1 mm² bis 50 mm², insbesondere von 2 mm² bis 30 mm², besonders bevorzugt von 2 mm² bis 15 mm², auf.

Fig. 2 zeigt eine weitere Ausführungsform der erfindungsgemäßen Elektrode, die durch eine zweite Ausführungsform des erfindungsgemäßen Herstellungsverfahrens hergestellt wurde. Zur Verbindung des Trägerwerkstoffs 1 und des Elektrodenwerkstoffs 2 wird zusätzlich ein Lotmaterial 13 auf die Fügefläche 8 aufgebracht oder neben der Fügefläche angebracht und die Fügetemperatur T_{F} sodann oberhalb der Schmelztemperatur T_{S} des Lots und unterhalb der Schmelztemperatur T_{S} des Trägerwerkstoffs 1 und des Elektrodenwerkstoffs 2 erhöht. Die Aufbringung des Lotmaterials 13 und die Erhöhung der Fügetemperatur T_{F} über die Schmelztemperatur T_{S} des Lotmaterials 13 bewirkt, insbesondere bei Unterdruck oder einem Vakuum, dass das Lotmaterial 13 aufschmilzt und durch Kapillareffekte in die Fügefläche 8 bzw. zwischen den Elektrodenwerkstoff 2 und den Trägerwerkstoff 1 hineingezogen wird und dadurch eine flächige Verbindung zwischen dem Elektrodenwerkstoff 2 und dem Trägerwerkstoff 1 ausgebildet wird. Während der Ausbildung der Verbindung mittels Lotmaterial 13 wurde überraschend festgestellt, dass optional ebenfalls ein Anteil von Atomen und/oder Ionen des Elektrodenwerkstoffs 2 und/oder des Trägerwerkstoffs 1 durch das Lotmaterial 13 bzw. über die Fügefläche 8 in den jeweils anderen Werkstoff eindringen können und die Verbindung verbessern.

Das Lotmaterial 13 bzw. das Lotbasismaterial wird dabei bevorzugt aus einem Werkstoff der Elementengruppe 9 bis 11 oder der Cobalt-, Nickel- oder Kupfergruppe oder einer Legierung daraus ausgewählt. Das Lotbasismaterial weist dabei insbesondere Legierungszusätze der Elementengruppen 4 bis 15 auf, wobei insbesondere Silber, Gold oder Nickel als Lotbasismaterial bevorzugt sind und Zusätze von Chrom, Silizium, Bor, Eisen, Molybdän, Phosphor, Palladium und/oder Kupfer und/oder Kombinationen davon aufweist.

In Fig. 3 ist eine weitere, durch eine optionale Ausführungsform des erfindungsgemäßen Verfahrens hergestellte Elektrode in schematischer Ansicht abgebildet. Zwischen dem Elektrodenwerkstoff 2 und dem Trägerwerkstoff 1 ist ein Zwischenwerkstoff 12 angeordnet, der vor der Erhöhung der Temperatur auf die Fügetemperatur T_{F} positioniert wurde. Der Zwischenwerkstoff 12 kann dabei an der Fügefläche 8 zwischen dem Trägerwerkstoff 1 und dem Elektrodenwerkstoff 2 eingelegt werden, sodass die Fügefläche 8 jeweils zwischen dem Trägermaterial 1 und dem Zwischenwerkstoff 12 und dem Elektrodenwerkstoff 2 und dem Zwischenwerkstoff 12 ausgebildet wird. Nach Aufbringen der definierten Atmosphäre und/oder Vakuum bzw. Unterdruck wird sodann die Temperatur in der Fügefläche 8 bzw. die Temperatur des Zwischenwerkstoffs 12, des Trägerwerkstoffs 1 und des Elektrodenwerkstoffs 2 auf die Fügetemperatur T_{F} erhöht, wobei die Fügetemperatur T_{F} dabei dann unterhalb der Schmelztemperatur T_{S} des Trägerwerkstoffs 1 und unterhalb der Schmelztemperatur T_{S} des Elektrodenwerkstoffs 2 und unterhalb der Schmelztemperatur T_{S} des Zwischenwerkstoffs 12 liegt. Nach Beibehalten der Fügetemperatur T_{F} über die Fügezeit t_{F} wird sodann jeweils eine flächige Verbindung zwischen dem Trägerwerkstoff 1 und dem Zwischenwerkstoff 12 und eine flächige Verbindung zwischen dem Elektrodenwerkstoff 2 und dem Zwischenwerkstoff 12 ausgebildet. Optional kann dabei auch auftreten, dass Atome bzw. Ionen des Elektrodenwerkstoffs 2 durch den Zwischenwerkstoff 12 hindurch in den Trägerwerkstoff 1, und/oder Atome bzw. Ionen des Trägerwerkstoffs 1 durch den Zwischenwerkstoff 12 hindurch in den Elektrodenwerkstoff 2 diffundieren.

Optional kann der Zwischenwerkstoff 12 auch als Diffusionsbeschleuniger ausgebildet sein, wobei hierbei der Zwischenwerkstoff insbesondere aus einer dünnen Schicht aus Kupfer oder Silber besteht oder diese umfasst. Durch den als Diffusionsbeschleuniger ausgebildeten Zwischenwerkstoff 12 kann die Diffusion von Atomen und/oder Ionen des Elektrodenwerkstoffs 2 durch den Zwischenwerkstoff 12 in den Trägerwerkstoff 1 und/oder die Diffusion von Atomen und/oder Ionen des Trägerwerkstoffs 1 durch den Zwischenwerkstoff 12 in den Elektrodenwerkstoff 2 beschleunigt werden. So wurde überraschend herausgefunden, dass durch eine dünne Schicht von Silber in der Dicke von 100 nm die Diffusion bei Vorliegen von einer Fügetemperatur T_{F} um ca. 95 % der Schmelztemperatur des Silberwerkstoffs die Diffusion um den Faktor 40 beschleunigt wurde.

Fig. 4 zeigt eine in dem Trägerwerkstoff 1 ausgebildete Vertiefung 11, in die der Elektrodenwerkstoff 2 bei Anlegen an den Trägerwerkstoff 1 teilweise versenkt angeordnet ist. Dies kann optional die Fügefläche 8 über den Rand des Elektrodenwerkstoffs 2 hinaus erhöhen und dabei optional die Positionierung des Elektrodenwerkstoffs 2 auf dem Trägerwerkstoff 1 erleichtern und zu einer erhöhten Festigkeit der Verbindung in der Fügefläche 8 beitragen. Alternativ kann die Vertiefung 11 bzw. das Eindringen des Elektrodenwerkstoffs 2 in den Trägerwerkstoff 1 auch während des Herstellungsverfahrens spontan auftreten. So wird vermutet, dass insbesondere bei den Diffusionsverfahren das Eindringen der Atome bzw. Ionen des Elektrodenwerkstoffs 2 in den Trägerwerkstoff 1 ein teilweises Eindringen des gesamten Elektrodenwerkstoffs 2 in den Trägerwerkstoff 1 bewirkt wird und derart eine Vertiefung 11 entstehen kann.

Eine weitere, in Fig. 18 dargestellte Ausführungsform des erfindungsgemäßen Verfahrens sieht vor, dass eine Mehrzahl von Trägerwerkstoffen 1 und Elektrodenwerkstoffen 2 gemeinsam in der Kammer zur Aufbringung der definierten Atmosphäre und/oder Vakuum bzw. Unterdruck positioniert werden. Dabei wird jeweils ein Trägerwerkstoff 1 mit einem Elektrodenwerkstoff 2 aneinander angelegt und die dabei entstandenen, paarweisen Anordnungen jeweils beispielsweise gestapelt zu einem sogenannten "Stack" oder in einem Abstand zueinander positioniert. Die paarweise zu verbindenden Trägerwerkstoffe 1 und Elektrodenwerkstoffe 2 können dabei jeweils durch einen Trennwerkstoff 19 oder eine Trennschicht voneinander getrennt sein. Der Trennwerkstoff 19 ist dabei ein Werkstoff, der sich weder mit dem Elektrodenwerkstoff 2 noch mit dem Trägerwerkstoff 1 verbindet bzw. die Verbindung von Trägerwerkstoffen 1 und Elektrodenwerkstoffen 2 jeweils anderer, paarweise angeordneter Werkstoffe unterbindet.

Fig. 5 zeigt eine Aufnahme der Fügefläche 8, mit einem Vergrößerungsfaktor von 70:1, die mittels eines Elektronenmikroskops vom Typ FEI Quanta 3D 200 Rasterelektronenmikroskop aufgenommen wurde, einer durch das erfindungsgemäße Verfahren hergestellten Elektrode. Die Elektrode weist einen Trägerwerkstoff 1 auf, auf den der Elektrodenwerkstoff 2 an der Fügefläche 8 angelegt und mittels des erfindungsgemäßen Verfahrens eine flächige Verbindung ausgebildet wurde. Der Elektrodenwerkstoff 2 weist die Dimensionen von 1,7 mm x 2,2 mm und eine Dicke von 0,5 mm auf. Der Elektrodenwerkstoff 2 besteht aus der Platin-Rhodium-Legierung PtRh 90/10 der Fa. Heraeus. Der Trägerwerkstoff 1 besteht bei dieser Ausführungsform aus der Nickel-Legierung VDM Nickel 201 auch bekannt als EN 2.4068.

Fig. 6 zeigt eine vergrößerte Aufnahme der Fügefläche 8 der Elektrode gemäß Fig. 5 in erhöhter Auflösung (1024 x 943 @96dpi, Bittiefe 24, Vergrößerungsfaktor von 250:1). An der Fügefläche 8 ist sichtbar, dass durch das erfindungsgemäße Verfahren Atome bzw. Ionen des Elektrodenwerkstoffs 2 in den Trägerwerkstoff 1 hineindiffundiert sind. Die Diffusionstiefe d_{F}, also die Distanz, die ein Atom bzw. Ion des Elektrodenwerkstoffs 2 in den Trägerwerkstoff 1 maximal eingedrungen ist, beträgt 36,8 µm. Die Diffusionstiefe d_{F} wurde anhand der mit dem Elektronenmikroskop aufgenommenen Aufnahme auf Basis des unterschiedlichen Kontrasts bzw. der unterschiedlichen Graufärbung an der Fügefläche 8 bestimmt. Dabei wurde die Methode Energiedispersive Röntgenspektroskopie (EDX) von der Firma EDAX in Kombination mit einem Solid State Back-Scattered Electron Imaging System (SSBSED) und einem ETD (Sekundär-Elektronen-Detektor) verwendet.

Fig. 7 zeigt eine Darstellung der Analyse des Verlaufs der Werkstoffkonzentration des Elektrodenwerkstoffs 2 und des Trägerwerkstoffs 1 an der Fügefläche 8. Die in Fig. 7 mit der Messung Energiedispersives Röntgen (EDX) erhaltene Konzentration der einzelnen Elemente zeigt, dass sowohl Rhodium (gekennzeichnet als "RhL" über die Intensität der Rhodium-L-Linie) als auch Platin (gekennzeichnet als "PtL" über die Intensität der Platin-L-Linie) von der ursprünglichen Fügefläche 8 ausgehend mit sinkender Konzentration in den Nickelwerkstoff (gekennzeichnet als "NiK" über die Intensität der Nickel-K-Linie) des Trägerwerkstoffs 1 eingedrungen sind. Ausgehend von der Fügefläche 8 bildet sich ein Diffusionsbereich aus, in dem sowohl Nickelatome bzw. -ionen als auch Rhodium- und Platin-Ionen bzw. -Atome entlang der Diffusionstiefe d_{F} von der ursprünglichen Fügefläche 8 in Richtung des Trägerwerkstoffs 1 in sinkender Konzentration vorliegen. Die Fig. 5 bis Fig. 7 zeigen den durch das erfindungsgemäße Herstellungsverfahren überraschend erreichten Effekt, dass sich von der Fügefläche 8 beginnend eine Diffusionszone ausbildet, in der Atome bzw. Ionen des Elektrodenwerkstoffs 2 in den Trägerwerkstoff 1 eindringen und dadurch eine flächige Verbindung zwischen dem Trägerwerkstoff 1 und dem Elektrodenwerkstoff 2 gebildet wird.

In den Fig. 8 bis Fig. 10 sind weitere Elektronenmikroskopaufnahmen einer Verbindung zwischen dem Trägerwerkstoff 1 und dem Elektrodenwerkstoff 2 in einer alternativen Ausführungsform dargestellt. Der Trägerwerkstoff 1 besteht aus der Nickel-Legierung VDM Nickel 201 auch bekannt als EN 2.4068 und der Elektrodenwerkstoff 2 aus einer Iridium-Rhodium-Legierung IrRh 90/10 der Firma Heraeus. Wie in den Fig. 8 bis Fig. 10 ersichtlich, ist an der Fügefläche 8 eine Diffusionszone ausgebildet, in der Ionen bzw. Atome des Elektrodenwerkstoffs 2 in den Trägerwerkstoff 1 hineindiffundiert sind. Die gemessene Diffusionstiefe d_{F} beträgt dabei 22,5 µm (Fig. 9). Fig. 8 zeigt dabei eine Aufnahme der Fügefläche 8 mit einer Auflösung von 1024 x 943 @96dpi, Bittiefe 24 und einem Vergrößerungsfaktor von 250:1 und Fig. 9 eine Auflösung von 1024 x 943 @96dpi, Bittiefe 24 mit einem Vergrößerungsfaktor von 1400:1.

In Fig. 10 ist schematisch der Konzentrationsverlauf der einzelnen Atome bzw. Ionen der einzelnen Werkstoffe des Trägerwerkstoffs 1 und des Elektrodenwerkstoffs 2 dargestellt. Ausgehend von der Fügefläche 8 in Richtung des Trägerwerkstoffs 1 nimmt die Konzentration von Rhodium und Iridium ab und die Nickelkonzentration steigt an. Ausgehend von der Fügefläche 8 bildet sich in der Diffusionszone somit ein Bereich aus, in dem sowohl Rhodium-(gekennzeichnet als "RhL" über die Intensität der Rhodium-L-Linie), Iridium- (gekennzeichnet als "IrL" über die Intensität der Iridium-L-Linie) als auch Nickel-Atome (gekennzeichnet als "NiK" über die Intensität der Nickel-K-Linie) bzw. -Ionen vorliegen und einen im Diffusionsbereich flächigen Verbund der beiden Werkstoffe ausbilden.

Fig. 11 zeigt eine alternative Ausführungsform der Elektrode, die mittels eines optionalen Herstellungsverfahrens mit Hilfe eines Lotmaterials 13 hergestellt wurde. An der Fügefläche 8 ist zwischen dem Trägerwerkstoff 1 und dem Elektrodenwerkstoff 2 ein Lotmaterial 13 angeordnet, das während des Herstellungsverfahrens auf die Fügefläche 8 aufgebracht wurde. Durch die Aufbringung des Lots wurde eine flächige Verbindung zwischen dem Trägerwerkstoff 1 und dem Elektrodenwerkstoff 2 über das Lotmaterial 13 hergestellt. Wie in Fig. 11 ersichtlich, weisen mittels Lots hergestellte Elektroden ebenfalls eine zuverlässige, flächige Verbindung zwischen dem Trägerwerkstoff 1 und dem Elektrodenwerkstoff 2 auf. Das Lotmaterial 13 kann bei der Erzeugung der flächigen Verbindung zwischen dem Elektrodenwerkstoff 2 und dem Trägerwerkstoff 1 optional vor oder nach der Positionierung des Elektrodenwerkstoffs 2 auf dem Trägerwerkstoff 1 aufgebracht oder während des Fügeprozesses in die Fügefläche 8 oder am Rand oder neben der Fügefläche 8 eingebracht bzw. angebracht werden. Bei der in Fig. 11 dargestellten, mittels Lots hergestellten Elektrode besteht der Elektrodenwerkstoff 2 aus PtRh 90/10 und der Trägerwerkstoff 1 aus VDM Nickel-201 bzw. EN 2.4068 Das Lotmaterial 13 besteht aus einem Silber-Lot, bei dieser Ausführungsform Silber Ag 99,99. Der Elektrodenwerkstoff 2 wurde an den Trägerwerkstoff 1 mit einer Flächenpressung von 65 mN/mm² angelegt und das Lotmaterial 13 auf die Fügefläche aufgebacht. Die Anordnung wurde unter Umgebungsatmosphäre positioniert und nach dem Evakuieren bis zu einem Vakuum von 8x10⁻⁵ mbar (v-Linie der Fig. 11b) der Heizprozess gestartet. Bei Erreichen einer Temperatur von 650°C wurde eine ArgonAtmosphäre mit 10 mbar (p-Linie der Fig. 11b) appliziert.

Der in Fig. 11a dargestellte Temperaturverlauf des Heizprozesses wurde derart ausgestaltet, dass die positionierte Anordnung ausgehend von Raumtemperatur bis 650°C binnen 50 Minuten und weiters mit 6°C/Minute auf eine Temperatur von 1010°C für eine Haltezeit von 5 Minuten erwärmt und nachfolgend auf Raumtemperatur abgekühlt wurde. Damit ergibt sich eine Fügezeit t_{F} von 14 min ab Überschreiten bis Unterschreiten der Schmelztemperatur T_{S,Lot} des Lotmaterials 13 von ca. 960°C. Damit wurde die Schmelztemperatur T_{S,Lot} des Lotmaterials 13 überschritten und jene von Trägerwerkstoff 1 und des Elektrodenwerkstoffs 2 nicht erreicht. Nach einem Abkühlprozess wurde dann das Schliffbild erzeugt und einer Untersuchung mit einem Elektronenmikroskop des Typs JEOL-JSM-IT200-LA mit EDX-Einheit unter Hockvakuum unterzogen. Die aus der Untersuchung mit dem Elektronenmikroskop erhaltene Aufnahme ist als Fig. 11 mit einem Vergrößerungsfaktor von 80:1 abgebildet.

Das in Fig. 11 dargestellte Schliffbild wurde mittels abrasivem Prozess unter Anwendung von Folien von Fa. Struers (Körnungen 220, 500, 800, 1000, 1200) jeweils ca. 1 Minute, Feinschliff auf MD Largo mit DiaPro Largo 9µ ca. 5 Minuten, Politur auf MD Floc mit DiaPro Floc 3µ ca. 3 Minuten und einer Endpolitur auf MD Nap mit Diapro Nap 1µ ca. 3 Minuten erzeugt.

Fig. 12 zeigt den Temperaturverlauf eines erfindungsgemäßen Herstellungsverfahrens einer flächigen Verbindung zwischen dem Trägerwerkstoff 1 und dem Elektrodenwerkstoff 2. Der Elektrodenwerkstoff 2 besteht bei dieser Ausführungsform aus der Platin-Rhodium Legierung Pt/Rh 90/10 und der Trägerwerkstoff 1 aus dem Nickelwerkstoff VDM Nickel 201 bzw. EN 2.4068. Der Elektrodenwerkstoff 2 wurde an der Fügefläche 8 an dem Trägerwerkstoff 1 angelegt und sodann mit einer Flächenpressung von 310 mN/mm² an den Trägerwerkstoff 1 angepresst. Die beiden aneinander angelegten Werkstoffe wurden sodann in einer Kammer zur Applizierung eines Unterdrucks bzw. Vakuums des Typs MOV 643 der Fa. PVA positioniert und ein Vakuum von 1x10⁻⁵ mbar, erkenntlich durch die v-Linie der Fig. 13, aufgebracht. Nach Applizieren des Vakuums wurde sodann die Temperatur in der Kammer, ausgehend von Raumtemperatur, in 40 min auf ein Temperaturhalteniveau von 930°C und nach 30 min weiters in einer Zeitspanne von 30 min auf 1120°C angehoben. Die Temperatur wurde dabei mittels Molybdän Heizelementen durch Wärmestrahlung auf die Werkstoffe aufgebracht Nach Abkühlen der Elektrode wurde diese sodann entnommen und den elektronenmikroskopischen Untersuchungen mit einem FEI Quanta 3D 200 Rasterelektronenmikroskop unterzogen. Vor Untersuchung durch das Elektronenmikroskop wurde die Elektrode einer Aufbereitung zu einem Schliffbild unterzogen und dann mit dem Elektronenmikroskop untersucht. Die Elektrode wurde dafür im Warmeinbettverfahren eingebettet, im Nasstrennverfahren senkrecht zur Fügefläche getrennt, mit Hilfe von Diamantsuspension poliert und unter Hochvakuum im EDX-Verfahren analysiert. Die Ergebnisse der Untersuchung, in denen die erreichte Diffusionstiefe der Platin- und Rhodium-Atome bzw. -Ionen von 36,8 µm vorgefunden wurde, sind in den Fig. 5 bis 7 dargestellt.

Die in den Fig. 8 bis Fig. 10 dargestellte Elektrode wurde gemeinsam mit der in Fig. 5 bis 7 dargestellten Elektrode entsprechend dem zuvor zu Fig. 12 beschriebenen Herstellungsverfahren in einem gemeinsamen Arbeitsgang hergestellt. Die Anordnung wurde unter Umgebungsatmosphäre positioniert. Nach dem Evakuieren der Kammer auf ein Vakuum von 5x10⁻⁵ mbar (v-Linie der Fig. 13) wurde die Erwärmung bis zu einer Haltetemperatur von 930°C vorgenommen. Nach einer Haltezeit von 30 Minuten wurde die Erwärmung mit 6,3°C/min fortgesetzt, bis zur Fügetemperatur von 1120°C und nach 4h Haltezeit bis 830°C unter Vakuum (1x10⁻⁵ mbar) und weiters bis Raumtemperatur unter 500 mbar Stickstoffatmosphäre (p-Linie der Fig. 13) abgekühlt. Die Haltezeit von 4 h bei 1120°C entspricht der Fügezeit t_{F} von 4 h, die Fügetemperatur von 1120°C entspricht 77 % T_{S} von VDM Nickel 201 bzw. EN 2.4068 und 60 % T_{S} von PtRh 90/10 der Fa. Heraeus und ca. 45 % T_{S} von IrRh 90/10 der Fa. Heraeus. Die Elektrode wurde ebenso im Warmeinbettverfahren eingebettet, im Nasstrennverfahren senkrecht zur Fügefläche getrennt, mit Hilfe von Diamantsuspension poliert und unter Hochvakuum im EDXVerfahren analysiert. Die in der Elektronenmikroskopuntersuchung erzeugten Bilder sind in den Fig. 8 bis Fig. 10 dargestellt, wobei eine Diffusionstiefe d_{F} von 22,5 µm der Atome bzw. Ionen von Iridium und Rhodium in den Nickel-Werkstoff des Trägerwerkstoffs 1 erzielt wurde.

In den Fig. 14 und Fig. 15 sind ein Vergleich zwischen einer durch das erfindungsgemäße Verfahren hergestellten Elektrode (Fig. 14) und einer mittels aus dem Stand der Technik bekanntem Laserschweißverfahren hergestellten Elektrode (Fig. 15, IrRh 90/10 Elektrodenplättchen auf Nickelträger von Fa. Bosch, hergestellt durch Laserstrahlschweißen) abgebildet. Wie in Fig. 14 ersichtlich, bilden die nach dem erfindungsgemäßen Herstellungsverfahren hergestellten Elektroden eine vollflächige Verbindung frei von Rissen und Lunkern zwischen dem Elektrodenwerkstoff 2 und dem Trägerwerkstoff 1 aus, und es wird eine feste und dauerhafte Verbindung zwischen den beiden Werkstoffen erreicht. Wie in Fig. 15 ersichtlich, bilden die aus dem Stand der Technik bekannten Elektroden keine vollflächige Verbindung zwischen dem Trägerwerkstoff 1 und dem Elektrodenwerkstoff 2 aus, sondern weisen an der Fügefläche 8 eine klare Materialgrenze auf. Wie in Fig. 15 in dem linken unteren Quadrat vergrößert abgebildet ist, weisen die aus dem Stand der Technik bekannten Elektroden ebenfalls lediglich im Bereich der linienförmigen Schweißnaht S eine Verbindung, jedoch im Bereich der über deren Randzone hinausgehenden Fügefläche 8 keine Verbindung zwischen dem Trägerwerkstoff 1 und dem Elektrodenwerkstoff 2 auf. Im Probeninneren wird somit kein Verbund zwischen dem Trägerwerkstoff 1 und dem Elektrodenwerkstoff 2 außerhalb der Schweißzone, die ca. 50 µm bis 100 µm in das Probeninnere ragt, erreicht. Ebenfalls ersichtlich in Fig. 15 ist, dass die aus dem Stand der Technik bekannten Elektroden Defekte durch das mechanische Aneinanderpressen der Werkstoffe aufweisen (rechtes oberes Quadrat, Fig. 15), an denen nach Untersuchungen erhöhte Korrosionsanfälligkeit vorliegt.

Im Vergleich der Fig. 14 und Fig. 15 hat sich in den Analysen durch Untersuchungen mit einem Elektronenmikroskop und weiteren Untersuchungen von gebrauchten Elektroden ergeben, dass nach dem erfindungsgemäßen Herstellungsverfahren ein vollflächiger Verbund des Trägerwerkstoffs 1 mit dem Elektrodenwerkstoff 2 erreicht wird, der im Gegensatz zum Stand der Technik eine höhere Festigkeit und dadurch eine längere Lebensdauer der aus den Elektroden erzeugten Zündkerzen bzw. Zündvorrichtungen bewirkt. Ein gleichmäßiger, vollflächiger Verbund zwischen dem Elektrodenwerkstoff und dem Trägerwerkstoff nach dem erfindungsgemäßen Verfahren erzielt auch einen besseren Wärmeübertrag bzw. eine höhere Wärmeleitung als der Stand der Technik und damit eine verbesserte Wärmeabfuhr von Elektroden im Einsatz und die Verbindungszone ist weiters von Funkenerosion verdeckt und daher besser geschützt.

Die Aufnahmen der Fig 5 bis Fig 11 sowie Fig. 14 und Fig. 15 wurden mit einem Elektronenmikroskop FEI Quanta 3D 200 Rasterelektronenmikroskop mit EDX von der Firma EDAX in Kombination mit einem Solid State Back-Scattered Elektron Imaging System (SSBSED) und einem Sekundär-Elektronen-Detektor (ETD oder Everhart-Thornley-Detektor) aufgenommen.

Wie in Fig. 17 und 18 dargestellt können optional auch mehrere Elektrodenwerkstoffe 2 bzw. Elektrodenplättchen 7 an einem gemeinsamen Trägerwerkstoff 1 angeordnet sein und mit diesem durch das erfindungsgemäße Verfahren gleichzeitig verbunden werden.

Die durch das erfindungsgemäße Verfahren hergestellten Elektroden wurden dann in Zündkerzen eingebaut und Erprobungen in einem Testaggregat und unter realen Bedingungen unterzogen. Nach mehreren Stunden Laufzeit konnten im Gegensatz zu Zündkerzen aus dem Stand der Technik keine nachteiligen Effekte erkannt werden. Das Aggregat, in dem die Zündkerzen verbaut wurden, wurde mit hohem Mitteldruck, verhältnismäßig hohen Temperaturen unter Einsatz von brennbarem Gas betrieben, ohne dass Beeinträchtigung der Verbindung bei erfindungsgemäßen Zündkerzen auftraten.

Die nach dem erfindungsgemäßem Verfahren hergestellten Zündvorrichtungen und Zündkerzen haben in Untersuchungen eine Standzeit von >4300 h erzielt. Zündkerzen, welche nach dem Stand der Technik mittels Schweißverbindung hergestellt und am selben Testaggregat verbaut wurden und somit durchgängig den identen Prozessbedingungen ausgesetzt waren, erzielten eine Standzeit von <2000 h bis zum Ausfall durch Verschleiß bzw. bis zum Überschreiten der elektrischen und thermischen Belastungsgrenze. Wobei bereits nach 1200 h bis 1800 h die Zündkerzen des Standes der Technik unbrauchbar waren.

Die durch das erfindungsgemäße Verfahren hergestellte Verbindung zwischen dem Elektrodenwerkstoff 2 und dem Trägerwerkstoff 1 war in den Untersuchungen stark genug, nicht durch Rissbildung, Heißgaskorrosion, Funkenerosion oder einen anderen die Einsatzdauer mindernden Effekt beschädigt zu werden, was ein Abfallen des Elektrodenplättchens 7 bzw. des Elektrodenwerkstoffs 2 und den Ausfall der Zündvorrichtung bzw. der Zündkerze zur Folge hätte. Zusätzlich zeigte sich, dass durch optimierte Wärmeleitung der flächigen Verbindung die Temperatur der Elektrodenplättchen 7 bzw. des Elektrodenwerkstoffs 2 gegenüber Zündvorrichtungen bzw. Zündkerzen nach dem Stand der Technik verringert ist und somit der Abbrand des Elektrodenwerkstoffs 2 verlangsamt wird, was eine höhere Standzeit zur Folge hat.

Begründet werden diese vorteilhaften Effekte in Wechselwirkung mit einer starken und hochfesten Verbindung einerseits und der mit dem erfindungsgemäßen Verfahren erzielten (voll-)flächigen Verbindung zwischen dem Elektrodenwerkstoff 2 und dem Trägerwerkstoff 1 andererseits.

In Fig. 16 und Fig. 17 sind zwei Zündkerzen in zwei unterschiedlichen beispielhaften Ausführungsformen dargestellt. Die in Fig. 16 dargestellte Zündkerze weist eine erste Elektrode 3 auf, die als Mittelelektrode ausgebildet ist. Die Zündkerze weist weiters eine zweite Elektrode 4 auf, die als Masseelektrode ausgebildet ist. Zwischen der ersten Elektrode 3 und der zweiten Elektrode 4 ist ein Zündspalt 6 ausgebildet, an dem der Funke zwischen der ersten Elektrode 3 und der zweiten Elektrode 4 ausgebildet werden kann. Die erste Elektrode 3 und die zweite Elektrode 4 weisen jeweils einen Träger 5 auf, der aus einem Nickel- oder Eisen-Werkstoff oder Inconel oder Refraktärmetall bestehen kann. An dem Träger 5 sind jeweils in Richtung des Zündspalts 6 gerichtete Elektrodenplättchen 7 angeordnet, zwischen denen dann der Zündfunke erzeugt wird. Die Verbindungen zwischen dem Träger 5 und den Elektrodenplättchen 7 wurden jeweils mit zuvor beschriebenen, erfindungsgemäßen Verfahren hergestellt. Der Träger 5 ist dabei als Trägerwerkstoff 1 und das Elektrodenplättchen 7 als Elektrodenwerkstoff 2 ausgebildet. Der Trägerwerkstoff 5 besteht bei der in Fig. 16 dargestellten Ausführungsform aus einem Nickel-Werkstoff und das Elektrodenplättchen 7 ist aus einem Edelmetall, einer Iridium-Rhodium-Legierung, ausgebildet. Die Elektrodenplättchen 7 der Elektroden 3, 4 sind mit den Trägerwerkstoffen 5 jeweils über eine Diffusionsverbindung wie zu den Fig. 5 bis Fig. 10 beschrieben vollflächig verbunden ausgebildet, können aber auch mittels eines Lots wie zu Fig. 11 beschrieben oder mittels eines Zwischenwerkstoffes hergestellt werden.

Fig. 17 zeigt eine weitere alternative Ausführungsform der erfindungsgemäßen Zündkerze in isometrischer Ansicht. Die Zündkerze weist zwei Elektroden 3, 4 auf, wobei die erste Elektrode 3 als Mittelelektrode und die zweite Elektrode 4 als Masseelektrode ausgebildet ist. Von der ersten Elektrode 3 erstreckt sich radial nach außen eine Zündelektrode 15. Die zweite Elektrode 4 weist jeweils zwei gegenüber der Zündelektrode 15 angeordnete Elektrodenplättchen 7 auf. Zwischen der Zündelektrode 15 und den vier an der zweiten Elektrode 4 angeordneten Elektrodenplättchen 7 ist jeweils ein Zündspalt 6 ausgebildet. Die Elektrodenplättchen 7 sind an einem Träger 5 der Masseelektrode bzw. der zweiten Elektrode 4 angeordnet und mit dieser über ein erfindungsgemäßes Herstellungsverfahren verbunden. Der Träger 5 ist als Trägerwerkstoff 1 und die Elektrodenplättchen 7 als Elektrodenwerkstoff 2 ausgebildet. Zwischen den Elektrodenplättchen 7 und dem Träger 5 wurde eine vollflächige Verbindung nach dem erfindungsgemäßen Verfahren hergestellt.

Optional zu den in Fig. 16 und Fig. 17 dargestellten Zündkerzen können die Träger 5 aus einer Titan-, Nickel- oder Eisen-Legierung, insbesondere aus einer Nickel- oder Chrom-Nickel-Legierung, Edelstahl, beispielsweise eine FeCrNi Legierung, oder Inconel, beispielsweise NiCrFe, oder einem Refraktärmetall, beispielsweise Wolfram, gebildet sein. Die Elektrodenplättchen 7 sind bevorzugt aus einem Edelmetall, insbesondere Platin, Iridium, Rhodium, Ruthenium oder einer Legierung daraus gebildet.

Die erfindungsgemäßen Zündkerzen weisen im Gegensatz zu den aus dem Stand der Technik bekannten Zündkerzen eine höhere Lebensdauer durch die flächige, vorzugsweise vollflächige, und stärkere Verbindung zwischen dem Elektrodenwerkstoff 2 und dem Trägerwerkstoff 1 bzw. zwischen dem Träger 5 und dem Elektrodenplättchen 7 auf und erlauben daher höhere Einsatzstunden und einen zuverlässigeren Betrieb der erfindungsgemäßen Zündkerzen.

Optional zu den in Fig. 16 und Fig. 17 dargestellten Ausführungsformen der Zündkerzen können erfindungsgemäße Zündkerzen auch andere Formen aufweisen, wobei erfindungsgemäße Zündkerzen eine flächige, insbesondere vollflächige, und gleichmäßige Verbindung zwischen dem Elektrodenwerkstoff 2 und dem Trägerwerkstoff 1 aufweisen.

Alternativ zu den in Fig. 16 und Fig. 17 dargestellten Zündkerzen können auch andere Zündvorrichtungen mittels des erfindungsgemäßen Verfahrens hergestellt werden, wobei die Zündvorrichtungen Elektroden mit einem Trägerwerkstoff 1 und einem Elektrodenwerkstoff 2 aufweisen, die mittels eines erfindungsgemäßen Verfahrens eine flächige Verbindung ausbilden. Derartige Zündvorrichtungen können beispielsweise ein oder mehrere Elektrodenpaare aufweisen. Derartige Zündvorrichtungen können beispielsweise Ringspalt-, Hacken- oder Kronenzündkerzen sein.

Optional können die mit dem erfindungsgemäßen Verfahren hergestellten Elektroden auch einer Vorbehandlung zur Positionierung unterzogen werden. So kann beispielsweise der Elektrodenwerkstoff 2 an dem Trägerwerkstoff 1 mittels Punktschweißung oder Laserheften punktuell angeheftet bzw. fixiert werden.

Zu den erfindungsgemäßen Ausführungsformen kann die Wärmemenge, die an die Fügefläche 8, den Trägerwerkstoff 1 und/oder den Elektrodenwerkstoff 2, zur Erhöhung auf die Fügetemperatur T_{F} abgegeben wird, vorteilhaft mittels Induktion, Strahlungswärme oder Wärmeleitung erzeugt werden.

## Patentansprüche

1. Verfahren zur Herstellung einer Elektrode für eine Zündvorrichtung, insbesondere einer Zündkerze, wobei an einem metallischen Trägerwerkstoff (1) ein metallischer Elektrodenwerkstoff (2) an einer Fügefläche (8) aneinander angelegt wird, wobei der Trägerwerkstoff (1) und der Elektrodenwerkstoff (2) an der Fügefläche (8) mit einer definierten Flächenpressung aneinander angepresst und in einer Kammer, in der ein Unterdruck, insbesondere eine Vakuum, und/oder eine definierte Atmosphäre erzeugt wird, positioniert werden,
wobei in der Kammer ein Unterdruck und/oder eine definierte Atmosphäre appliziert wird,
wobei die Fügefläche (8)gleichmäßig auf eine Fügetemperatur (T_{F}) erhitzt wird,
wobei die Fügetemperatur (T_{F}) derart für eine Fügezeit (t_{F}) beibehalten wird, sodass eine Verbindung des Trägerwerkstoffs (1) und des Elektrodenwerkstoffs (2) an der Fügefläche (8) entsteht und der Trägerwerkstoff (1) und der Elektrodenwerkstoff (2) eine flächige, insbesondere vollflächige, gleichmäßige Verbindung ausgehend von der Fügefläche (8) miteinander ausbilden,
wobei der Trägerwerkstoff (1) aus einem Werkstoff einer Nickel- oder Chrom-Nickel-Legierung oder Stahl, bevorzugt aus Nickel in reiner Form, Nickelbasislegierungen, FeCrNi- oder FeCrNiMo-Edelstähle besteht, **dadurch gekennzeichnet, dass** die Fügetemperatur (T_{F}) unterhalb der Schmelztemperatur (T_{S}) des Trägerwerkstoffs (1) und des Elektrodenwerkstoffs (2) liegt.

2. Verfahren nach Anspruch 1, **dadurch gekennzeichnet, dass** die Wärmemenge, die an die Fügefläche (8), insbesondere den Trägerwerkstoff (1) und den Elektrodenwerkstoff (2), zur Erhöhung auf die Fügetemperatur (T_{F}) abgegeben wird, mittels Induktion, Strahlungswärme oder Wärmeleitung erzeugt wird.

3. Verfahren nach Anspruch 1 oder 2, **dadurch gekennzeichnet, dass** die Fügetemperatur (T_{F}) derart für eine Fügezeit (t_{F}) beibehalten wird, sodass eine metallische Verbindung in Form von metallischen Bindungen ohne Ausbildung von intermetallischen Phasen zwischen dem Trägerwerkstoff (1) und dem Elektrodenwerkstoff (2) ausgebildet wird, wobei insbesondere die Diffusion von Atomen und/oder Ionen des Elektrodenwerkstoffs (2) in den Trägerwerkstoff (1) und/oder die Diffusion von Atomen und/oder Ionen des Trägerwerkstoffs (1) in den Elektrodenwerkstoff (2) größer gleich 0,05 µm, insbesondere zwischen 1 µm und 100 µm, besonders bevorzugt zwischen 20 µm und 40 µm, beträgt.

4. Verfahren nach einem der vorangehenden Ansprüche, **dadurch gekennzeichnet, dass** der Trägerwerkstoff (1) und der Elektrodenwerkstoff (2) mit einer Mindestflächenpressung von 10 mN/mm² bis 2500 mN/mm², insbesondere von 100 mN/mm² bis 600 mN/mm², aneinander angepresst werden.

5. Verfahren nach einem der vorangehenden Ansprüche, **dadurch gekennzeichnet, dass** das Verfahren unter Vakuum, einem Unterdruck, und/oder unter einer sauerstoffreduzierten, insbesondere sauerstofffreien, und/oder unter einer inerten und/oder unter einer reduzierenden Atmosphäre durchgeführt wird, wobei das Vakuum, der Unterdruck, und/oder die sauerstoffreduzierte, insbesondere sauerstofffreie, und/oder inerte und/oder reduzierende Atmosphäre im Laufe des Verfahrens verändert wird, und/oder
dass die Fügetemperatur (T_{F}) 30 % bis 98 %, insbesondere 50 % bis 98 %, besonders bevorzugt 75 % bis 95 %, der Schmelztemperatur (T_{S}) des Trägerwerkstoffs (1) und/oder des Elektrodenwerkstoffs (2) beträgt.

6. Verfahren nach einem der vorangehenden Ansprüche, **dadurch gekennzeichnet, dass** die Fügezeit (t_{F}) nach Überschreiten einer Schwelltemperatur (T_{Schwell}) von 30 % der Schmelztemperatur (Tₛ) des Trägerwerkstoffs (1) und/oder des Elektrodenwerkstoffs (2) 1 min bis 24 h, insbesondere 1 h bis 4 h, besonders bevorzugt 1 h bis 2 h, beträgt.

7. Verfahren nach einem der vorangehenden Ansprüche, **dadurch gekennzeichnet, dass** die Fügefläche (8) eine Größe von 1 mm² bis 50 mm², insbesondere 2 mm² bis 30 mm², besonderes bevorzugt von 2 mm² bis 15 mm², aufweist, und/oder
dass der Elektrodenwerkstoff (2) eine Dicke von 0,05 mm bis 2 mm, insbesondere 0,05 mm bis 0,5 mm, besonders bevorzugt von 0,05 mm bis 0,25 mm, aufweist.

8. Verfahren nach einem der vorangehenden Ansprüche, **dadurch gekennzeichnet, dass** der Elektrodenwerkstoff (2) aus einem Werkstoff der Elementengruppe 4 bis 11 oder der Titan-, Vanadium-, Chrom-, Mangan,- Eisen-, Cobalt-, Nickel- oder Kupfergruppe, insbesondere aus Platin, Iridium, Rhodium, Ruthenium, Rhenium oder aus einer Legierungen daraus, besteht.

9. Verfahren nach einem der vorangehenden Ansprüche, **dadurch gekennzeichnet, dass** ein Lotmaterial (13) auf und/oder neben die Fügefläche (8) vor oder nach der Positionierung des Elektrodenwerkstoffs (2) auf dem Trägerwerkstoff (1) aufgebracht oder angebracht oder eingebracht wird, wobei die Fügetemperatur (T_{F}) oberhalb der Schmelztemperatur des Lots und jeweils unterhalb der Schmelztemperatur (T_{S}) des Trägerwerkstoffs (1) und des Elektrodenwerkstoffs (2) liegt, wobei insbesondere die Fügezeit (t_{F}) nach Überschreiten der Schmelztemperatur (T_{S}) des Lotmaterials (13) 10 Sekunden bis 2 Stunden, bevorzugt 1 Minute bis 60 Minuten, beträgt.

10. Verfahren nach Anspruch 9, **dadurch gekennzeichnet, dass** das Lotbasismaterial des Lotmaterials (13) aus einem Werkstoff der Elementengruppe 9 bis 11 oder der Cobalt-, Nickel- oder Kupfergruppe oder einer Legierung daraus ausgewählt ist, wobei das Lotbasismaterial des Lotmaterials (13) insbesondere Legierungszusätze der Elementengruppen 4 bis 15 aufweist, wobei das Lotmaterial (13) insbesondere aus Silber, Gold oder Nickel als Lotbasismaterial besteht und vorzugsweise Zusätze von Chrom, Silizium, Bor, Eisen, Molybdän, Phosphor, Palladium und/oder Kupfer und/oder Kombinationen davon aufweist, wobei das Lotmaterial bevorzugt Ag 99,99 oder NiCrSiBFe oder NiCrSi ist.

11. Verfahren nach einem der vorangehenden Ansprüche, **dadurch gekennzeichnet, dass** der Trägerwerkstoff (1) eine Vertiefung (11) aufweist, wobei der Elektrodenwerkstoff (2), bei Anlegen an den Trägerwerkstoff (1) zumindest teilweise in der Vertiefung (11) versenkt angeordnet wird.

12. Verfahren nach einem der vorangehenden Ansprüche, **dadurch gekennzeichnet, dass** auf dem Trägerwerkstoff (1) oder dem Elektrodenwerkstoff (2) zwischen dem Trägerwerkstoff (1) und dem Elektrodenwerkstoff (2) ein Zwischenwerkstoff (12) angeordnet ist, wobei die Fügefläche (8) jeweils zwischen dem Trägerwerkstoff (1) und dem Zwischenwerkstoff (12) und dem Elektrodenwerkstoff (2) und dem Zwischenwerkstoff (12) ausgebildet wird, wobei die Fügetemperatur (T_{F}) unterhalb der Schmelztemperatur (T_{S}) des Trägerwerkstoffs (1) und des Elektrodenwerkstoff (2) und des Zwischenwerkstoffs (12) liegt, wobei jeweils der Trägerwerkstoff (1) mit dem Zwischenwerkstoff (12) und der Elektrodenwerkstoff (2) mit dem Zwischenwerkstoff (12) eine flächige Verbindung miteinander ausbilden,
und/oder dass der Zwischenwerkstoff (12) als diffusionsbeschleunigender Werkstoff, insbesondere Silber oder Kupfer, ausgebildet ist, wobei die Diffusion von Atomen und/oder Ionen des Elektrodenwerkstoffs (2) durch den Zwischenwerkstoff (12) in den Trägerwerkstoff (1) und/oder die Diffusion von Atomen und/oder Ionen des Trägerwerkstoffs (1) durch den Zwischenwerkstoff (12) in den Elektrodenwerkstoff (2) durch den Zwischenwerkstoff (12) beschleunigt wird.

13. Verfahren nach einem der vorangehenden Ansprüche, **dadurch gekennzeichnet, dass** der Trägerwerkstoff (1) und/oder der Elektrodenwerkstoff (2), insbesondere und/oder der Zwischenwerkstoff (12), an der Fügefläche (8) einen Mittenrauwert Ra von 0,01 µm bis 6,3 µm, insbesondere von 0,02 µm bis 0,5 µm, aufweist.

14. Verfahren nach einem der vorangehenden Ansprüche, **dadurch gekennzeichnet, dass** eine Mehrzahl von Trägerwerkstoffen (1) und Elektrodenwerkstoffen (2) paarweise jeweils zu einem Stack gestapelt angeordnet werden, wobei die paarweise zu verbindenden Trägerwerkstoffe (1) und die Elektrodenwerkstoffe (2) jeweils zu anderen Paaren durch einen Trennwerkstoff (19) und/oder eine Trennschicht untereinander getrennt sind.

15. Verfahren zur Herstellung einer Zündkerze, insbesondere für Verbrennungskraftmaschinen oder Gasmotoren, wobei eine erste Elektrode (3), insbesondere eine Mittelelektrode, und eine zweite Elektrode (4), insbesondere eine Masseelektrode, ausgebildet werden, wobei zwischen der ersten Elektrode (3) und der zweiten Elektrode (4), insbesondere zwischen der Mittelelektrode und der Masseelektrode, ein Zündspalt (6) ausgebildet wird,
wobei an der ersten Elektrode (3), insbesondere der Mittelektrode, und/oder der zweiten Elektrode (4), insbesondere der Masseelektrode, ein Träger (5) aus einem Trägerwerkstoff (1) ausgebildet wird,
wobei an dem Träger (5) ein in Richtung des Zündspalts (6) gerichtetes Elektrodenplättchen (7) bestehend aus einem Elektrodenwerkstoff (2) angeordnet wird, **dadurch gekennzeichnet, dass** die Verbindung zwischen dem Träger (5) und dem Elektrodenplättchen (7) nach einem Verfahren gemäß einem der Ansprüche 1 bis 14 hergestellt wird.

16. Zündkerze, insbesondere für Verbrennungskraftmaschinen oder Gasmotoren, insbesondere hergestellt nach einem Verfahren nach Anspruch 15, umfassend eine erste Elektrode (3), insbesondere eine Mittelelektrode, und eine zweite Elektrode (4), insbesondere eine Masseelektrode, wobei zwischen der ersten Elektrode (3), insbesondere der Mittelelektrode, und der zweiten Elektrode (4), insbesondere der Masseelektrode, ein Zündspalt (6) ausgebildet ist,
wobei die erste Elektrode (3), insbesondere die Mittelelektrode, und/oder die zweite Elektrode (4), insbesondere die Masseelektrode, einen Träger (5), insbesondere einen Nickel-Träger, aufweisen, an dem eine in Richtung des Zündspalts (6) gerichtetes Elektrodenplättchen (7) angeordnet ist,
**dadurch gekennzeichnet, dass** die Verbindung zwischen dem Träger (5) und dem Elektrodenplättchen (7) nach einem Verfahren gemäß der Ansprüche 1 bis 14 hergestellt ist, wobei der Träger (5) als Trägerwerkstoff (1) und das Elektrodenplättchen (7) als Elektrodenwerkstoff (2) ausgebildet ist.

17. Zündkerze nach Anspruch 16, **dadurch gekennzeichnet, dass** der Träger (5) aus einer Nickel- oder Chrom-Nickel-Legierung oder Stahl, bevorzugt aus Nickel in reiner Form, Nickelbasislegierungen, FeCrNi- oder FeCrNiMo-Edelstähle, gebildet ist und wobei das Elektrodenplättchen (7) aus einem Edelmetall, insbesondere Platin, Iridium, Rhodium, Ruthenium, Rhenium oder einer Legierung daraus, insbesondere Platin/Rhodium-, Platin/Rhenium-, Platin/Iridium- Iridium/Rhenium- oder Iridium/Rhodium-Legierungen, gebildet ist,
wobei besonders bevorzugt das Elektrodenplättchen (7) eine Legierung aus PtRh 90/10 und der Träger (5) eine Legierung aus VDM Nickel 201 bzw. EN 2.4068 oder das Elektrodenplättchen (7) eine Legierung aus IrRh 90/10 und der Träger (5) eine Legierung aus VDM Nickel 201 bzw. EN 2.4068 aufweist.

18. Zündvorrichtung, insbesondere für Verbrennungskraftmaschinen oder Gasmotoren, umfassend eine erste Elektrode (3), insbesondere eine Mittelelektrode, und eine zweite Elektrode (4), insbesondere eine Masseelektrode, wobei zwischen der ersten Elektrode (3), insbesondere der Mittelelektrode, und der zweiten Elektrode (4), insbesondere der Masseelektrode, ein Zündspalt (6) ausgebildet ist,
wobei die erste Elektrode (3), insbesondere die Mittelelektrode, und/oder die zweite Elektrode (4), insbesondere die Masseelektrode, einen Träger (5), insbesondere einen Nickel-Träger, aufweisen, an dem eine in Richtung des Zündspalts (6) gerichtetes Elektrodenplättchen (7) angeordnet ist,
**dadurch gekennzeichnet, dass** der Träger (5) und das Elektrodenplättchen (7) eine flächige, insbesondere vollflächige, gleichmäßige Verbindung miteinander aufweisen, wobei die Verbindung zwischen dem Träger (5) und dem Elektrodenplättchen (7) nach einem Verfahren gemäß der Ansprüche 1 bis 14 hergestellt ist, wobei insbesondere der Träger (5) als Trägerwerkstoff (1) und das Elektrodenplättchen (7) als Elektrodenwerkstoff (2) ausgebildet ist,
wobei im Bereich der flächigen Verbindung zwischen dem Träger (5) und dem Elektrodenplättchen (7) eine Diffusionszone ausgebildet ist, an der eine Konzentration des Werkstoffs des Trägers (5) ausgehend vom Träger (5) in Richtung des Elektrodenplättchens (7) von 100 % bis 0 % und eine Konzentration des Werkstoffs des Elektrodenplättchens (7) ausgehend vom Träger (5) in Richtung des Elektrodenplättchens (7) von 0 % bis 100 % vorliegt,
wobei insbesondere die Diffusionstiefe größer gleich 0,05 µm, insbesondere zwischen 1 µm und 100 µm, besonders bevorzugt zwischen 20 µm und 40 µm, beträgt.

19. Zündvorrichtung nach Anspruch 18, **dadurch gekennzeichnet, dass** der Träger (5) aus einer Nickel- oder Chrom-Nickel-Legierung oder Stahl, bevorzugt aus Nickel in reiner Form, Nickelbasislegierungen, FeCrNi- oder FeCrNiMo-Edelstahl, gebildet ist und wobei das Elektrodenplättchen (7) aus einem Edelmetall, insbesondere Platin, Iridium, Rhodium, Ruthenium, Rhenium oder einer Legierung daraus, insbesondere Platin/Rhodium-, Platin/Rhenium-, Platin/Iridium-, Iridium/Rhenium- oder Iridium/Rhodium-Legierungen, gebildet ist,
wobei besonders bevorzugt das Elektrodenplättchen (7) eine Legierung aus PtRh 90/10 und der Träger (5) eine Legierung aus VDM Nickel 201 bzw. EN 2.4068 oder das Elektrodenplättchen (7) eine Legierung aus IrRh 90/10 und der Träger (5) eine Legierung aus VDM Nickel 201 bzw. EN 2.4068 aufweist.

## Claims

1. Method for producing an electrode for an ignition device, in particular a spark plug, wherein a metal electrode material (2) is applied to a joining surface (8) on a metal carrier material (1), wherein the carrier material (1) and the electrode material (2) are pressed against one another at the joining surface (8) with a defined surface pressure and are positioned in a chamber in which a negative pressure, in particular a vacuum, and/or a defined atmosphere is generated,
wherein a negative pressure and/or a defined atmosphere is applied in the chamber,
wherein the joining surface (8) is heated uniformly to a joining temperature (T_{F}),
wherein the joining temperature (T_{F}) is maintained for a joining time (t_{F}) so that a connection between the carrier material (1) and the electrode material (2) is produced at the joining surface (8), and the carrier material (1) and the electrode material (2) form a flat, in particular full-surface, uniform connection with one another starting from the joining surface (8),
wherein the carrier material (1) consists of a nickel or chromium-nickel alloy or steel material, preferably nickel in its pure form, nickel-based alloys, FeCrNi or FeCrNiMo stainless steels, **characterized in that** the joining temperature (T_{F}) is below the melting temperature (T_{S}) of the carrier material (1) and the electrode material (2).

2. Method according to claim 1, **characterized in that** the amount of heat that is transferred to the joining surface (8), in particular the carrier material (1) and the electrode material (2), to raise it to the joining temperature (T_{F}) is produced by means of induction, radiant heat or heat conduction.

3. Method according to claim 1 or 2, **characterized in that** the joining temperature (T_{F}) is maintained for a joining time (t_{F}) so that a metallic connection in the form of metallic bonds is formed between the carrier material (1) and the electrode material (2) without forming intermetallic phases, wherein in particular the diffusion of atoms and/or ions of the electrode material (2) into the carrier material (1) and/or the diffusion of atoms and/or ions of the carrier material (1) into the electrode material (2) is greater than or equal to 0.05 µm, in particular between 1 µm and 100 µm, and most preferably between 20 µm and 40 µm.

4. Method according to any one of the preceding claims, **characterized in that** the carrier material (1) and the electrode material (2) are pressed against one another at a minimum surface pressure of 10 mN/mm² to 2500 mN/mm², in particular 100 mN/mm² to 600 mN/mm².

5. Method according to any one of the preceding claims, **characterized in that** the method is performed under vacuum, under negative pressure, and/or under an oxygen-reduced, in particular oxygen-free, and/or under an inert and/or under a reducing atmosphere, wherein the vacuum, the negative pressure, and/or the oxygen-reduced, in particular oxygen-free, and/or inert and/or reducing atmosphere is changed during the course of the method, and/or
**in that** the joining temperature (T_{F}) is 30% to 98%, in particular 50% to 98%, most preferably 75% to 95%, of the melting temperature (T_{S}) of the carrier material (1) and/or the electrode material (2).

6. Method according to any one of the preceding claims, **characterized in that** the joining time (t_{F}) after exceeding a threshold temperature (T_{threshold}) of 30% of the melting temperature (T_{S}) of the carrier material (1) and/or the electrode material (2) is 1 min to 24 h, in particular 1 h to 4 h, most preferably 1 h to 2 h.

7. Method according to any one of the preceding claims, **characterized in that** the joining surface (8) has a size of 1 mm² to 50 mm², in particular 2 mm² to 30 mm², particularly preferably 2 mm² to 15 mm², and/or
**in that** the electrode material (2) has a thickness of 0.05 mm to 2 mm, in particular 0.05 mm to 0.5 mm, most preferably 0.05 mm to 0.25 mm.

8. Method according to any one of the preceding claims, **characterized in that** the electrode material (2) consists of a material from the element group 4 to 11 or the titanium, vanadium, chromium, manganese, iron, cobalt, nickel or copper group, in particular platinum, iridium, rhodium, ruthenium, rhenium or alloys thereof.

9. Method according to any one of the preceding claims, **characterized in that** a solder material (13) is applied or attached or introduced onto and/or next to the joining surface (8) before or after positioning the electrode material (2) on the carrier material (1), wherein the joining temperature (T_{F}) is above the melting temperature of the solder and below the melting temperature (T_{S}) of the carrier material (1) and the electrode material (2) respectively, wherein, in particular, the joining time (t_{F}) after exceeding the melting temperature (T_{S}) of the solder material (13) is 10 seconds to 2 hours, preferably 1 minute to 60 minutes.

10. Method according to claim 9, **characterized in that** the solder base material of the solder material (13) is selected from a material of the element group 9 to 11 or the cobalt, nickel or copper group or an alloy thereof, wherein the solder base material of the solder material (13) has in particular alloy additives from element groups 4 to 15, wherein the solder material (13) consists in particular of silver, gold or nickel as the solder base material and preferably comprises additives of chromium, silicon, boron, iron, molybdenum, phosphorus, palladium and/or copper and/or combinations thereof, wherein the solder material is preferably Ag 99.99 or NiCrSiBFe or NiCrSi.

11. Method according to any one of the preceding claims, **characterized in that** the carrier material (1) has a recess (11), wherein the electrode material (2), when applied to the carrier material (1), is at least partially sunk into the recess (11).

12. Method according to any one of the preceding claims, **characterized in that** an intermediate material (12) is arranged on the carrier material (1) or the electrode material (2) between the carrier material (1) and the electrode material (2), wherein the joining surface (8) is formed respectively between the carrier material (1) and the intermediate material (12) and the electrode material (2) and the intermediate material (12), wherein the joining temperature (T_{F}) is below the melting temperature (T_{S}) of the carrier material (1) and the electrode material (2) and the intermediate material (12), wherein the carrier material (1) with the intermediate material (12) and the electrode material (2) with the intermediate material (12) respectively form a flat connection with one another,
and/or **in that** the intermediate material (12) is in the form of a diffusion-accelerating material, in particular silver or copper, wherein the diffusion of atoms and/or ions of the electrode material (2) through the intermediate material (12) into the carrier material (1) and/or the diffusion of atoms and/or ions of the carrier material (1) through the intermediate material (12) into the electrode material (2) is accelerated by the intermediate material (12).

13. Method according to any one of the preceding claims, **characterized in that** the carrier material (1) and/or the electrode material (2), in particular and/or the intermediate material (12), has an average roughness value Ra of 0.01 µm to 6.3 µm, in particular 0.02 µm to 0.5 µm, at the joining surface (8).

14. Method according to any one of the preceding claims, **characterized in that** a plurality of carrier materials (1) and electrode materials (2) are arranged in pairs, piled up respectively to make a stack, wherein the carrier materials (1) and electrode materials (2) to be joined in pairs are separated from other pairs by a separating material (19) and/or a separating layer.

15. Method for producing a spark plug, in particular for internal combustion engines or gas engines, wherein a first electrode (3), in particular a center electrode, and a second electrode (4), in particular a ground electrode, are formed, wherein an ignition gap (6) is formed between the first electrode (3) and the second electrode (4), in particular between the center electrode and the ground electrode,
wherein a carrier (5) made of a carrier material (1) is formed on the first electrode (3), in particular the center electrode, and/or the second electrode (4), in particular the ground electrode,
wherein an electrode platelet (7) consisting of an electrode material (2) and directed towards the ignition gap (6) is arranged on the carrier (5),
**characterized in that** the connection between the carrier (5) and the electrode platelet (7) is produced according to a method according to any one of claims 1 to 14.

16. Spark plug, in particular for internal combustion engines or gas engines, in particular produced according to a method according to claim 15, comprising a first electrode (3), in particular a center electrode, and a second electrode (4), in particular a ground electrode, wherein an ignition gap (6) is formed between the first electrode (3), in particular the center electrode, and the second electrode (4), in particular the ground electrode,
wherein the first electrode (3), in particular the center electrode, and/or the second electrode (4), in particular the ground electrode, have a carrier (5), in particular a nickel carrier, on which an electrode platelet (7) directed towards the ignition gap (6) is arranged,
**characterized in that** the connection between the carrier (5) and the electrode platelet (7) is produced according to a method according to claims 1 to 14, wherein the carrier (5) is in the form of a carrier material (1) and the electrode platelet (7) is in the form of an electrode material (2).

17. Spark plug according to claim 16, **characterized in that** the carrier (5) is made of a nickel or chromium-nickel alloy or steel, preferably of nickel in its pure form, nickel-based alloys, FeCrNi or FeCrNiMo stainless steels, and wherein the electrode platelet (7) is made of a precious metal, in particular platinum, iridium, rhodium, ruthenium, rhenium or an alloy thereof, in particular platinum/rhodium, platinum/rhenium, platinum/iridium, iridium/rhenium or iridium/rhodium alloys,
wherein it is most preferred that the electrode platelet (7) has an alloy of PtRh 90/10 and the carrier (5) has an alloy of VDM Nickel 201 or EN 2.4068, or the electrode platelet (7) has an alloy of IrRh 90/10 and the carrier (5) has an alloy of VDM Nickel 201 or EN 2.4068.

18. Ignition device, in particular for internal combustion engines or gas engines, comprising a first electrode (3), in particular a center electrode, and a second electrode (4), in particular a ground electrode, wherein an ignition gap (6) is formed between the first electrode (3), in particular the center electrode, and the second electrode (4), in particular the ground electrode,
wherein the first electrode (3), in particular the center electrode, and/or the second electrode (4), in particular the ground electrode, have a carrier (5), in particular a nickel carrier, on which an electrode platelet (7) directed towards the ignition gap (6) is arranged,
**characterized in that** the carrier (5) and the electrode platelet (7) have a flat, in particular full-surface, uniform connection with one another, wherein the connection between the carrier (5) and the electrode platelet (7) is produced according to a method according to claims 1 to 14, wherein in particular the carrier (5) is in the form of a carrier material (1) and the electrode platelet (7) is in the form of an electrode material (2),
wherein a diffusion zone is formed in the region of the flat connection between the carrier (5) and the electrode platelet (7), at which diffusion zone a concentration of the material of the carrier (5) starting from the carrier (5) in the direction of the electrode platelet (7) is from 100% to 0% and a concentration of the material of the electrode platelet (7) starting from the carrier (5) in the direction of the electrode platelet (7) is from 0% to 100%,
wherein, in particular, the diffusion depth is greater than or equal to 0.05 µm, in particular between 1 µm and 100 µm, and most preferably between 20 µm and 40 µm.

19. Ignition device according to claim 18, **characterized in that** the carrier (5) is made of a nickel or chromium-nickel alloy or steel, preferably of nickel in its pure form, nickel-based alloys, FeCrNi or FeCrNiMo stainless steel, and wherein the electrode platelet (7) is made of a precious metal, in particular platinum, iridium, rhodium, ruthenium, rhenium or an alloy thereof, in particular platinum/rhodium, platinum/rhenium, platinum/iridium, iridium/rhenium or iridium/rhodium alloys,
wherein it is most preferred that the electrode platelet (7) has an alloy of PtRh 90/10 and the carrier (5) has an alloy of VDM Nickel 201 or EN 2.4068, or the electrode platelet (7) has an alloy of IrRh 90/10 and the carrier (5) has an alloy of VDM Nickel 201 or EN 2.4068.

## Revendications

1. Procédé de fabrication d'une électrode pour un dispositif d'allumage, en particulier une bougie d'allumage, dans lequel un matériau d'électrode métallique (2) est appliqué sur un matériau de support métallique (1) au niveau d'une surface d'assemblage (8), dans lequel le matériau de support (1) et le matériau d'électrode (2) sont pressés l'un contre l'autre sur la surface d'assemblage (8) avec une pression de surface définie et sont positionnés dans une chambre dans laquelle une dépression, en particulier un vide, et/ou une atmosphère définie sont générés,
dans lequel une dépression et/ou une atmosphère définie sont appliquées dans la chambre,
dans lequel la surface d'assemblage (8) est chauffée uniformément à une température d'assemblage (T_{F}),
dans lequel la température d'assemblage (T_{F}) est maintenue pendant un temps d'assemblage (t_{F}) de sorte qu'une connexion se forme entre le matériau de support (1) et le matériau d'électrode (2) au niveau de la surface d'assemblage (8), et le matériau de support (1) et le matériau d'électrode (2) forment entre eux une connexion plane, en particulier plane sur toute la surface, uniforme à partir de la surface d'assemblage (8),
dans lequel le matériau de support (1) est constitué d'un matériau en alliage de nickel ou de chrome-nickel ou en acier, de préférence en nickel sous forme pure, en alliages à base de nickel, d'aciers inoxydables FeCrNi ou FeCrNiMo, **caractérisé en ce que** la température d'assemblage (T_{F}) est inférieure à la température de fusion (T_{S}) du matériau de support (1) et du matériau d'électrode (2).

2. Procédé selon la revendication 1, **caractérisé en ce que** la quantité de chaleur qui est transmise à la surface d'assemblage (8), en particulier au matériau de support (1) et au matériau d'électrode (2), pour les élever à la température d'assemblage (T_{F}), est générée par induction, rayonnement thermique ou conduction thermique.

3. Procédé selon la revendication 1 ou 2, **caractérisé en ce que** la température d'assemblage (T_{F}) est maintenue pendant une durée d'assemblage (t_{F}) de sorte qu'une connexion métallique sous forme de liaisons métalliques est conçue sans formation de phases intermétalliques entre le matériau de support (1) et le matériau d'électrode (2), dans lequel en particulier la diffusion d'atomes et/ou d'ions du matériau d'électrode (2) dans le matériau de support (1) et/ou la diffusion d'atomes et/ou d'ions du matériau de support (1) dans le matériau d'électrode (2) est supérieure ou égale à 0,05 µm, en particulier entre 1 µm et 100 µm, de préférence entre 20 µm et 40 µm.

4. Procédé selon l'une quelconque des revendications précédentes, **caractérisé en ce que** le matériau de support (1) et le matériau d'électrode (2) sont pressés l'un contre l'autre avec une pression minimale de surface de 10 mN/mm² à 2500 mN/mm², en particulier de 100 mN/mm² à 600 mN/mm².

5. Procédé selon l'une quelconque des revendications précédentes, **caractérisé en ce que** le procédé est mis en œuvre sous vide, sous une dépression et/ou sous une atmosphère appauvrie en oxygène, en particulier exempte d'oxygène, et/ou sous une atmosphère inerte et/ou réductrice, dans lequel le vide, la dépression et/ou l'atmosphère appauvrie en oxygène, en particulier exempte d'oxygène, et/ou inerte et/ou réductrice est modifié au cours du procédé, et/ou
**en ce que** la température d'assemblage (T_{F}) se monte de 30 % à 98 %, en particulier de 50 % à 98 %, le plus préférentiellement de 75 % à 95 %, de la température de fusion (T_{S}) du matériau de support (1) et/ou du matériau d'électrode (2).

6. Procédé selon l'une quelconque des revendications précédentes, **caractérisé en ce que** le temps d'assemblage (t_{F}) après dépassement d'une température seuil (Tₛₑᵤᵢₗ) de 30 % de la température de fusion (T_{S}) du matériau de support (1) et/ou du matériau d'électrode (2) est de 1 min à 24 h, en particulier de 1 h à 4 h, de préférence de 1 h à 2 h.

7. Procédé selon l'une quelconque des revendications précédentes, **caractérisé en ce que** la surface d'assemblage (8) présente une taille de 1 mm² à 50 mm², en particulier de 2 mm² à 30 mm², de préférence de 2 mm² à 15 mm², et/ou
**en ce que** le matériau d'électrode (2) présente une épaisseur de 0,05 mm à 2 mm, en particulier de 0,05 mm à 0,5 mm, le plus préférentiellement de 0,05 mm à 0,25 mm.

8. Procédé selon l'une quelconque des revendications précédentes, **caractérisé en ce que** le matériau d'électrode (2) est constitué d'un matériau du groupe d'éléments 4 à 11 ou du groupe du titane, vanadium, chrome, manganèse, fer, cobalt, nickel ou cuivre, en particulier du platine, de l'iridium, du rhodium, du ruthénium, du rhénium ou d'un alliage de ceux-ci.

9. Procédé selon l'une quelconque des revendications précédentes, **caractérisé en ce qu'**un matériau de soudure (13) est appliqué ou placé sur ou introduit à côté de la surface d'assemblage (8) avant ou après le positionnement du matériau d'électrode (2) sur le matériau de support (1), dans lequel la température d'assemblage (T_{F}) est supérieure à la température de fusion de la soudure et inférieure à la température de fusion (T_{S}) du matériau de support (1) et du matériau d'électrode (2), dans lequel le temps d'assemblage (t_{F}) après dépassement de la température de fusion (T_{S}) du matériau de soudure (13) est de 10 secondes à 2 heures, de préférence de 1 minute à 60 minutes.

10. Procédé selon la revendication 9, **caractérisé en ce que** le matériau de base de soudure (13) est sélectionné parmi un matériau du groupe d'éléments 9 à 11 ou du groupe du cobalt, nickel ou cuivre ou d'un alliage de ceux-ci, dans lequel le matériau de base de soudure du matériau de soudure (13) présente en particulier des additifs d'alliage des groupes d'éléments 4 à 15, dans lequel le matériau de soudure (13) est constitué en particulier d'argent, d'or ou de nickel comme matériau de base de soudure et présente de préférence des additifs de chrome, silicium, bore, fer, molybdène, phosphore, palladium et/ou cuivre et/ou des combinaisons de ceux-ci, dans lequel le matériau de soudure est de préférence Ag 99,99 ou NiCrSiBFe ou NiCrSi.

11. Procédé selon l'une quelconque des revendications précédentes, **caractérisé en ce que** le matériau de support (1) présente un renfoncement (11), dans lequel le matériau d'électrode (2), lorsqu'il est appliqué sur le matériau de support (1), est au moins partiellement enfoncé dans le renfoncement (11).

12. Procédé selon l'une quelconque des revendications précédentes, **caractérisé en ce qu'**un matériau intermédiaire (12) est disposé sur le matériau de support (1) ou le matériau d'électrode (2) entre le matériau de support (1) et le matériau d'électrode (2), dans lequel la surface d'assemblage (8) est conçue respectivement entre le matériau de support (1) et le matériau intermédiaire (12) et le matériau d'électrode (2) et le matériau intermédiaire (12), dans lequel la température d'assemblage (T_{F}) est inférieure à la température de fusion (T_{S}) du matériau de support (1) et du matériau d'électrode (2) et du matériau intermédiaire (12), dans lequel respectivement le matériau de support (1) avec le matériau intermédiaire (12) et le matériau d'électrode (2) avec le matériau intermédiaire (12) forment une liaison plane entre eux,
et/ou **en ce que** le matériau intermédiaire (12) est conçu en tant que matériau accélérant la diffusion, en particulier de l'argent ou du cuivre, dans lequel la diffusion d'atomes et/ou d'ions du matériau d'électrode (2) à travers le matériau intermédiaire (12) dans le matériau de support (1) et/ou la diffusion d'atomes et/ou d'ions du matériau de support (1) à travers le matériau intermédiaire (12) dans le matériau d'électrode (2) est accélérée par le matériau intermédiaire (12).

13. Procédé selon l'une quelconque des revendications précédentes, **caractérisé en ce que** le matériau de support (1) et/ou le matériau d'électrode (2), en particulier et/ou le matériau intermédiaire (12), présente une valeur de rugosité moyenne Ra de 0,01 µm à 6,3 µm, en particulier de 0,02 µm à 0,5 µm, au niveau de la surface d'assemblage (8).

14. Procédé selon l'une quelconque des revendications précédentes, **caractérisé en ce qu'**une pluralité de matériaux de support (1) et de matériaux d'électrode (2) est disposée par paires pour former une pile, dans lequel les matériaux de support (1) et les matériaux d'électrode (2) à assembler par paires sont séparés d'autres paires par un matériau de séparation (19) et/ou une couche de séparation.

15. Procédé de fabrication d'une bougie d'allumage, en particulier pour des moteurs à combustion ou des moteurs à gaz, dans lequel une première électrode (3), en particulier une électrode centrale, et une seconde électrode (4), en particulier une électrode de masse sont conçues, dans lequel un intervalle d'allumage (6) est conçu entre la première électrode (3) et la seconde électrode (4), en particulier entre l'électrode centrale et l'électrode de masse,
dans lequel un support (5) est conçu à partir d'un matériau de support (1) sur la première électrode (3), en particulier l'électrode centrale, et/ou la seconde électrode (4), en particulier l'électrode de masse,
dans lequel une plaquette d'électrode (7) orientée en direction de l'intervalle d'allumage (6) et constituée d'un matériau d'électrode (2) est disposée sur le support (5),
**caractérisée en ce que** la connexion entre le support (5) et la plaquette d'électrode (7) est réalisée selon un procédé conforme à l'une quelconque des revendications 1 à 14.

16. Bougie d'allumage, en particulier pour moteurs à combustion interne ou moteurs à gaz, réalisée en particulier selon un procédé conforme à la revendication 15, comprenant une première électrode (3), en particulier une électrode centrale, et une seconde électrode (4), en particulier une électrode de masse, dans lequel un intervalle d'allumage (6) est conçu entre la première électrode (3), en particulier l'électrode centrale, et la seconde électrode (4), en particulier l'électrode de masse,
dans lequel la première électrode (3), en particulier l'électrode centrale, et/ou la seconde électrode (4), en particulier l'électrode de masse, présentent un support (5), en particulier un support en nickel, sur lequel une plaquette d'électrode (7) orientée en direction de l'intervalle d'allumage (6) est disposée,
**caractérisée en ce que** la connexion entre le support (5) et la plaquette d'électrode (7) est réalisée selon un procédé conforme aux revendications 1 à 14, dans lequel le support (5) est conçu en tant que matériau de support (1) et la plaquette d'électrode (7) en tant que matériau d'électrode (2).

17. Bougie d'allumage selon la revendication 16, **caractérisée en ce que** le support (5) est formé d'un alliage de nickel ou de chrome-nickel ou d'acier, de préférence de nickel sous forme pure, d'alliages à base de nickel, d'aciers inoxydables FeCrNi ou FeCrNiMo, et dans lequel la plaquette d'électrode (7) est constituée d'un métal précieux, en particulier de platine, d'iridium, de rhodium, de ruthénium, de rhénium ou d'un alliage de ceux-ci, en particulier d'alliages de platine/rhodium, platine/rhénium, platine/iridium, iridium/rhénium ou iridium/rhodium,
dans lequel la plaquette d'électrode (7) est de préférence constituée d'un alliage de PtRh 90/10 et le support (5) est constitué d'un alliage de VDM Nickel 201 ou EN 2.4068, ou la plaquette d'électrode (7) est constituée d'un alliage de IrRh 90/10 et le support (5) est constitué d'un alliage de VDM Nickel 201 ou EN 2.4068.

18. Dispositif d'allumage, en particulier pour moteurs à combustion interne ou moteurs à gaz, comprenant une première électrode (3), en particulier une électrode centrale, et une seconde électrode (4), en particulier une électrode de masse, dans lequel un intervalle d'allumage (6) est conçu entre la première électrode (3), en particulier l'électrode centrale, et la seconde électrode (4), en particulier l'électrode de masse,
dans lequel la première électrode (3), en particulier l'électrode centrale, et/ou la seconde électrode (4), en particulier l'électrode de masse, présentent un support (5), en particulier un support en nickel, sur lequel une plaquette d'électrode (7) orientée en direction de l'intervalle d'allumage (6) est disposée,
**caractérisé en ce que** le support (5) et la plaquette d'électrode (7) présentent entre eux une connexion plane, en particulier plane sur toute la surface, uniforme, dans lequel la connexion entre le support (5) et la plaquette d'électrode (7) est réalisée selon un procédé conforme aux revendications 1 à 14, dans lequel le support (5) est en particulier conçu en tant que matériau de support (1) et la plaquette d'électrode (7) en tant que matériau d'électrode (2),
dans lequel, dans la zone de connexion plane entre le support (5) et la plaquette d'électrode (7), une zone de diffusion est conçue dans laquelle une concentration du matériau du support (5) partant du support (5) dans la direction de la plaquette d'électrode (7) va 100 % à 0 % et une concentration du matériau de la plaque d'électrode (7) partant du support (5) dans la direction de la plaquette d'électrode (7) va de 0 % à 100 %,
dans lequel la profondeur de diffusion est en particulier supérieure ou égale à 0,05 µm, en particulier entre 1 µm et 100 µm, le plus préférentiellement entre 20 µm et 40 µm.

19. Dispositif d'allumage selon la revendication 18, **caractérisée en ce que** le support (5) est formé d'un alliage de nickel ou de chrome-nickel ou d'acier, de préférence de nickel sous forme pure, d'alliages à base de nickel, d'acier inoxydable FeCrNi ou FeCrNiMo, et dans lequel la plaquette d'électrode (7) est constituée d'un métal précieux, en particulier de platine, d'iridium, de rhodium, de ruthénium, de rhénium ou d'un alliage de ceux-ci, en particulier d'alliages de platine/rhodium, platine/rhénium, platine/iridium, iridium/rhénium ou iridium/rhodium,
dans lequel la plaquette d'électrode (7) est de préférence constituée d'un alliage de PtRh 90/10 et le support (5) est constitué d'un alliage de VDM Nickel 201 ou EN 2.4068, ou la plaquette d'électrode (7) est constituée d'un alliage de IrRh 90/10 et le support (5) est constitué d'un alliage de VDM Nickel 201 ou EN 2.4068.
